# EUROPEAN PATENT SPECIFICATION

(11) **EP 4 075 918 B1**
(45) Date of publication and mention of the grant of the patent: **21.05.2025**
(21) Application number: 20911441.2
(22) Date of filing: 06.01.2020
(51) Int. Cl.: H04W 88/04, H04W 76/14

(54) **COMMUNICATION METHOD AND DEVICE**
KOMMUNIKATIONSVERFAHREN UND -VORRICHTUNG
PROCÉDÉ ET DISPOSITIF DE COMMUNICATION

(43) Date of publication of application: 19.10.2022
(73) Proprietor: Huawei Technologies Co., Ltd., Shenzhen, Guangdong 518129 (CN)
(72) Inventor: XU, Shengfeng, Shenzhen, Guangdong 518129 (CN); YING, Jiangwei, Shenzhen, Guangdong 518129 (CN); LI, Meng, Shenzhen, Guangdong 518129 (CN)
(74) Representative: Goddar, Heinz J.
(86) International application number: PCT/CN2020/070446
(87) International publication number: WO 2021/138764

(56) References cited:
- EP-A1- 3 200 486
- WO-A1-2016/160614
- CN-A- 104 969 619
- CN-A- 108 141 864
- US-A1- 2016 270 134
- US-A1- 2017 359 766
- HUAWEI, HISILICON: "Support for UE Cooperation in NR", 3GPP DRAFT; R1-164379, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, 27 May 2016 (2016-05-27), Mobile Competence Centre ; 650, route des Lucioles ; F-06921 Sophia-Antipolis Cedex ; France, pages 1 - 7, XP051089769

## Description

### TECHNICAL FIELD

Embodiments of this application relate to the field of communication technologies, and in particular, to a communication method and an apparatus.

### BACKGROUND

With rapid development of mobile communication, universal use of new service types, for example, data services such as video chat and virtual reality (virtual reality, VR for short)/augmented reality (augmented reality, AR for short), increases a bandwidth requirement of a user. Device-to-device (Device-to-Device, D2D for short) communication allows direct communication between terminals, and can share spectrum resources with cell users under control of a cell network, so that utilization of the spectrum resources is effectively improved. Currently, the D2D communication has been applied to a 4G network system. The D2D communication includes one-to-many communication (one to many communication) and one-to-one communication (one to one communication). In the one-to-one communication, if a sender device and a receiver device are within a short distance range, the sender device and the receiver device may directly communicate with each other after mutual discovery. If the sender device and the receiver device are not in the short distance range, the sender device and the receiver device cannot discover each other, and cannot directly perform the D2D communication. In this case, a relay (Relay) device may be introduced for assistance, and communication between the sender device and the receiver device is implemented through communication between the sender device and the relay device and communication between the relay device and the receiver device.

Currently, there may be a plurality of communication links between two terminals that can directly perform communication. These communication links include a communication link used for direct communication between the two terminals, and further include a communication link used for indirect communication of relay transmission. Either of the two terminals needs to separately maintain connectivity of the plurality of communication links, so that link connectivity maintenance overheads are high.
US 2016/270134 discloses a user equipment that is configured to receive a request from a first peer UE to communicate with a target user corresponding to a second peer UE. The UE is configured to determine that the second peer UE is within a communication range of the UE. The UE is configured to, in response to receiving the request, relay internet protocol packets from the first peer UE to the second peer UE and relay IP packets from the second peer UE to the first peer UE.

### SUMMARY

The present invention as claimed provides communications methods and an apparatus, to reduce overheads of maintaining link connectivity by a terminal.

According to a first aspect, an embodiment of this application provides a communication method of claim 1, including: A first terminal receives a first message from a relay terminal, where the relay terminal is a relay terminal used for communication between the first terminal and a second terminal. The first message includes first indication information, an application layer identifier of the second terminal, and a first address of the second terminal. The first indication information can indicate the first unicast link between the first terminal and the relay terminal. The first terminal updates first information of the first unicast link based on the first message, to obtain updated second information of the first unicast link. The second information includes the application layer identifier of the second terminal and the first address.

In this solution, the second information of the first unicast link is obtained by adding information about the second terminal as new receiver information to a profile of the first unicast link (the first information of the first unicast link) corresponding to the first terminal. In this way, both direct communication between the relay terminal and the first terminal and communication between the second terminal and the first terminal implemented by using the relay terminal as a relay may be implemented based on the second information of the first unicast link. It is equivalent to that a same unicast link between the relay terminal and the first terminal is used for both a direct communication purpose and a relay communication purpose between the relay terminal and the first terminal, so that links that need to be maintained between the first terminal and the relay terminal are reduced, and link maintenance overheads are reduced.

In a possible implementation, the method further includes: The first terminal sends first data to the relay terminal over the first unicast link based on the second information of the first unicast link. The first data includes the first address, and the first address indicates that a destination receive end of the first data is the second terminal.

In this solution, when the first terminal needs to send the first data to the second terminal by using the relay terminal, the first data carries the first address of the second terminal, to indicate that the destination receive end of the first data currently sent to the relay terminal is the second terminal, and normal communication between the first terminal and the second terminal when links for implementing direct communication and relay communication between the first terminal and the relay terminal are a same unicast link is ensured.

According to the first aspect, the first address of the second terminal includes a network layer address of the second terminal. The second information further includes a data link layer address of the relay terminal. The data link layer address of the relay terminal is associated with an application layer identifier of the relay terminal, and the data link layer address of the relay terminal is further associated with the application layer identifier of the second terminal.

In this solution, the first address of the second terminal includes the network layer address of the second terminal, and the network layer address of the second terminal may be allocated by the relay terminal, or may be allocated by the second terminal. When the data link layer address of the relay terminal is associated with the application layer identifier of the relay terminal, and the data link layer address of the relay terminal is further associated with the application layer identifier of the second terminal, the network layer address of the second terminal carried in the first data sent by the first terminal to the relay terminal may indicate that the destination receive end of the first data is the second terminal, and the normal communication between the first terminal and the second terminal when the links for implementing the direct communication and the relay communication between the first terminal and the relay terminal are the same unicast link is ensured.

In a possible implementation, the first address of the second terminal includes a data link layer address of the second terminal.

In this solution, in one case, the data link layer address of the second terminal is a data link layer identifier that is allocated by the second terminal and that is used to identify the unicast link between the second terminal and the relay terminal. Therefore, the data link layer address of the second terminal carried in the first data sent by the first terminal to the relay terminal may indicate that the destination receive end of the first data is the second terminal, and the normal communication between the first terminal and the second terminal when the links for implementing the direct communication and the relay communication between the first terminal and the relay terminal are the same unicast link is ensured. In another case, the data link layer address of the second terminal is allocated by the relay terminal. When the first terminal needs to communicate with the second terminal, the data link layer address of the second terminal carried in the first data sent by the first terminal to the relay terminal may indicate that the destination receive end of the first data is the second terminal, and the normal communication between the first terminal and the second terminal when the links for implementing the direct communication and the relay communication between the first terminal and the relay terminal are the same unicast link is ensured.

In a possible implementation, the first indication information includes a link identifier of the first unicast link.

This solution provides a specific implementation of the first indication information, to reduce signaling overheads.

In a possible implementation, the first indication information includes the data link layer address of the relay terminal and a data link layer address of the first terminal.

This solution provides another specific implementation of the first indication information.

In a possible implementation, the first indication information includes the application layer identifier of the relay terminal and an application layer identifier of the first terminal.

This solution provides another specific implementation of the first indication information.

In a possible implementation, the first message further includes the data link layer address of the relay terminal.

In this solution, the first message includes the data link layer address of the relay terminal, so that when the first unicast link is not established between the first terminal and the relay terminal, the first terminal can establish the first unicast link based on the data link layer address of the relay terminal.

In a possible implementation, the method further includes: The first terminal sends a response message of the first message to the relay terminal. The response message indicates that update of the second information is completed.

In this solution, the relay terminal may learn that the update of the second information of the first unicast link is completed, so that the relay terminal may continue to establish and update a link with the second terminal or may continue to update a link with the second terminal.

In a possible implementation, before the first terminal updates the first information of the first unicast link based on the first message, the method further includes: The first terminal determines that the first unicast link has been established based on the first message.

In this solution, after the first terminal determines that the first unicast link has been established based on the first message, the first terminal may directly update the first information of the first unicast link to the second information of the first unicast link, so that efficiency of establishing a communication link is improved.

According to a second aspect, an embodiment of this application provides a communication method of claim 6, including: A relay terminal generates a first message, where the relay terminal is a relay terminal used for communication between a first terminal and a second terminal. The first message includes first indication information, an application layer identifier of the second terminal, and a first address of the second terminal. The first indication information can indicate a first unicast link between the first terminal and the relay terminal. The relay terminal sends the first message to the first terminal.

In this solution, after the relay terminal sends the first message to the first terminal, the first terminal can update the first information of the first unicast link based on the first message, to obtain updated second information of the first unicast link. The second information includes the application layer identifier of the second terminal and the first address. That is, this solution enables the first terminal to add information about the second terminal as new receiver information to a profile of the first unicast link (the first information of the first unicast link) corresponding to the first terminal, to obtain the second information of the first unicast link. In this way, both direct communication between the relay terminal and the first terminal and communication between the second terminal and the first terminal implemented by using the relay terminal as a relay may be implemented based on the second information of the first unicast link. It is equivalent to that a same unicast link between the relay terminal and the first terminal is used for both a direct communication purpose and a relay communication purpose between the relay terminal and the first terminal, so that links that need to be maintained between the first terminal and the relay terminal are reduced, and link maintenance overheads are reduced.

According to the second aspect, the first address includes a network layer address of the second terminal.

For beneficial effects of this solution, refer to the descriptions in the first aspect. Details are not described herein again.

According to the second aspect, the first message further includes a data link layer address of the relay terminal. The data link layer address of the relay terminal is associated with an application layer identifier of the relay terminal.

For beneficial effects of this solution, refer to the descriptions in the first aspect. Details are not described herein again.

In a possible implementation, the first indication information includes a link identifier of the first unicast link.

For beneficial effects of this solution, refer to the descriptions in the first aspect. Details are not described herein again.

In a possible implementation, the first indication information includes a data link layer address of the first terminal and the data link layer address of the relay terminal.

For beneficial effects of this solution, refer to the descriptions in the first aspect. Details are not described herein again.

In a possible implementation, the first indication information includes the application layer identifier of the relay terminal and an application layer identifier of the first terminal.

This solution provides another specific implementation of the first indication information.

In a possible implementation, before the relay terminal sends the first message to the first terminal, the method further includes: The relay terminal determines that the first unicast link is established between the relay terminal and the first terminal.

In this solution, after the relay terminal determines that the first unicast link is established between the relay terminal and the first terminal, the data link layer address of the relay terminal may not be carried, to reduce signaling overheads and power consumption of the first terminal.

In a possible implementation, the method further includes: The relay terminal receives a response message of the first message from the first terminal. The response message indicates that first information of the first unicast link has been updated to second information, and the second information includes the application layer identifier of the second terminal and the first address.

For beneficial effects of this solution, refer to the descriptions in the first aspect. Details are not described herein again.

In a possible implementation, the first address includes a network layer address of the second terminal, and the method further includes: The relay terminal receives first data from the first terminal. The first data includes a data link layer address of the first terminal, a network layer address of the first terminal, a data link layer address of the relay terminal, and a network layer address of the second terminal. The relay terminal determines, based on the data link layer address of the relay terminal and the network layer address of the second terminal, that a destination receive end of the first data is the second terminal. The relay terminal sends the first data to the second terminal. Optionally, that the relay terminal determines, based on the network layer address of the second terminal, that a destination receive end of the first data is the second terminal includes: determining, based on the network layer address of the second terminal and a correspondence, that the destination receive end of the first data is the second terminal. The correspondence may indicate that the network layer address of the second terminal corresponds to the second terminal. In an implementation, the correspondence may include at least one network layer address and an identifier of a terminal corresponding to each network layer address. The at least one network layer address includes the network layer address of the second terminal.

This solution can ensure normal communication between the first terminal and the second terminal when links for implementing direct communication and relay communication between the first terminal and the relay terminal are a same unicast link.

In a possible implementation, the first address includes a data link layer address of the second terminal, and the method further includes: The relay terminal receives first data from the first terminal. The first data includes a data link layer address of the first terminal and the data link layer address of the second terminal. The relay terminal determines, based on the data link layer address of the second terminal, that a destination terminal of the first data is the second terminal. The relay terminal sends the first data to the second terminal. That the relay terminal determines, based on the data link layer address of the second terminal, that a destination terminal of the first data is the second terminal includes: determining, based on the data link layer address of the second terminal and a correspondence, that the destination receive end of the first data is the second terminal. The correspondence may indicate that the data link layer address of the second terminal corresponds to the second terminal. In an implementation, the correspondence may include at least one data link layer address and an identifier of a terminal corresponding to each data link layer address. The at least one data link layer address includes the data link layer address of the second terminal.

This solution can ensure the normal communication between the first terminal and the second terminal when the links for implementing the direct communication and the relay communication between the first terminal and the relay terminal are the same unicast link.

According to a further aspect, an embodiment of this application provides a terminal, including: at least one processor and a memory communicatively connected to the at least one processor. The memory stores instructions that can be executed by the at least one processor, and the instructions are executed by the at least one processor, so that the at least one processor can perform the method according to any one of the first aspect or the possible implementations of the first aspect, or perform the method according to any one of the second aspect or the possible implementations of the second aspect.

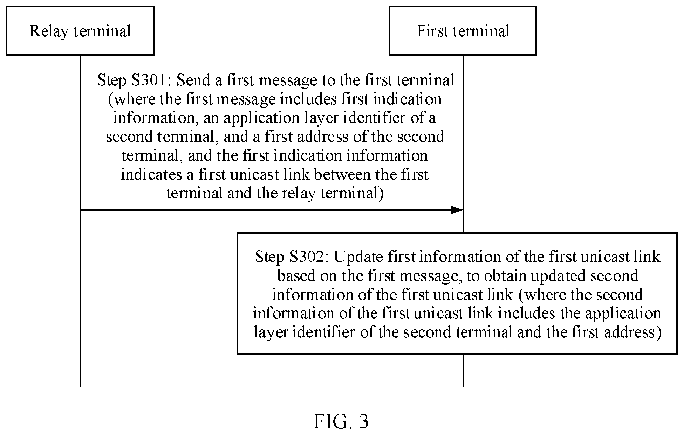

In this application, when the first terminal needs to communicate with the second terminal by using the relay terminal, the first terminal adds information about the second terminal as new receiver information to a profile of the first unicast link (first information of the first unicast link) corresponding to the first terminal, to obtain the second information of the first unicast link. In this way, both direct communication between the relay terminal and the first terminal and communication between the second terminal and the first terminal implemented by using the relay terminal as a relay may be implemented based on the second information of the first unicast link. It is equivalent to that a same unicast link established between the relay terminal and the first terminal is used for various communication purposes between the relay terminal and the first terminal, so that links that need to be maintained between the first terminal and the relay terminal are reduced, and link maintenance overheads are reduced. In the following, the invention is best understood in view of Figures 3 to 5. The remaining embodiments, aspects, or examples are included in order to help the reader better understand the invention.

### BRIEF DESCRIPTION OF DRAWINGS

FIG. 1 is a diagram of a system architecture according to an embodiment of this application;
FIG. 2 is an interaction diagram of a relay link establishment process;
FIG. 3 is a flowchart 1 of a communication method according to the present invention;
FIG. 4A, FIG. 4B, and FIG. 4C are a flowchart 2 of a communication method according to the present invention;
FIG. 5A, FIG. 5B, and FIG. 5C are a flowchart 3 of a communication method according to the present invention;
FIG. 6 is a flowchart 4 of a communication method according to an embodiment of this application;
FIG. 7A and FIG. 7B are a flowchart 5 of a communication method according to an embodiment of this application;
FIG. 8 is a schematic diagram of a structure of a communication apparatus according to an embodiment of this application;
FIG. 9 is a schematic block diagram of an implementation of a communication device according to an embodiment of this application; and
FIG. 10 is a schematic diagram of a structure of a terminal device according to an embodiment of this application.

### DETAILED DESCRIPTION OF EMBODIMENTS

To better understand this application, the following elements are introduced in this application.
1. Information about a unicast link in embodiments of this application may be used to store a context of the unicast link (unicast link), and a specific form is not limited. In embodiments of this application, an example in which the information about the unicast link is a unicast link profile is used for description. The unicast link may also be referred to as a unicast link or a unicast connection.
2. Unicast link profile (also referred to as profile of a unicast link): The unicast link profile is used to describe a unicast link between two terminals.

If the two terminals include a terminal 1 and a terminal 2, a profile describing the unicast link stored in the terminal 1 of the two terminals is in the following form:
an application layer identifier of the terminal 1, and a data link layer identifier of the terminal 1; and
an application layer identifier of the terminal 2, and a data link layer identifier of the terminal 2.

The application layer identifier of the terminal 1 and the data link layer identifier of the terminal 1 are sender information, and the application layer identifier of the terminal 2 and the data link layer identifier of the terminal 2 are receiver information. The profile describing the unicast link stored in the terminal 1 may be referred to as a profile describing the unicast link corresponding to the terminal 1.

A profile describing the unicast link stored in terminal 2 of the two terminals is in the following form:
an application layer identifier of the terminal 2, and a data link layer identifier of the terminal 2; and
an application layer identifier of the terminal 1, and a data link layer identifier of the terminal 1.

The application layer identifier of the terminal 2 and the data link layer identifier of the terminal 2 are sender information, and the application layer identifier of the terminal 1 and the data link layer identifier of the terminal 1 are receiver information. The profile describing the unicast link stored in the terminal 2 may be referred to as a profile describing the unicast link corresponding to the terminal 2.

After both the profile describing the unicast link corresponding to the terminal 1 and the profile describing the unicast link corresponding to the terminal 2 are generated, the unicast link between the terminal 1 and the terminal 2 is established.

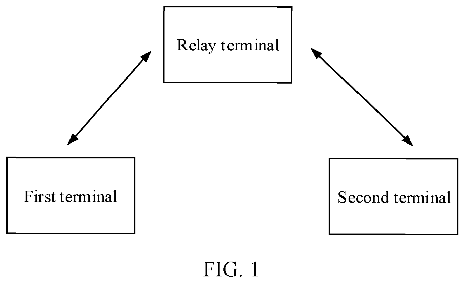

FIG. 1 is a diagram of a system architecture according to an embodiment of this application, the system architecture includes a first terminal, a relay terminal, and a second terminal. The relay terminal is used for communication between the second terminal and the first terminal.

When the first terminal needs to communicate with the second terminal, and the first terminal determines that the second terminal cannot be directly discovered, the first terminal may determine the relay terminal through a relay discovery procedure, to communicate with the second terminal by using the relay terminal. Similarly, when the second terminal needs to communicate with the first terminal, and the second terminal determines that the first terminal cannot be directly discovered, the second terminal may determine the relay terminal through the relay discovery procedure, to communicate with the first terminal by using the relay terminal.

The terminal in this embodiment may be user equipment (user equipment, UE for short), a handheld terminal, a notebook computer, a cellular phone, a smartphone, a tablet computer, a handheld device, an AR device, a VR device, a machine type communication terminal, or another device that can access a network.

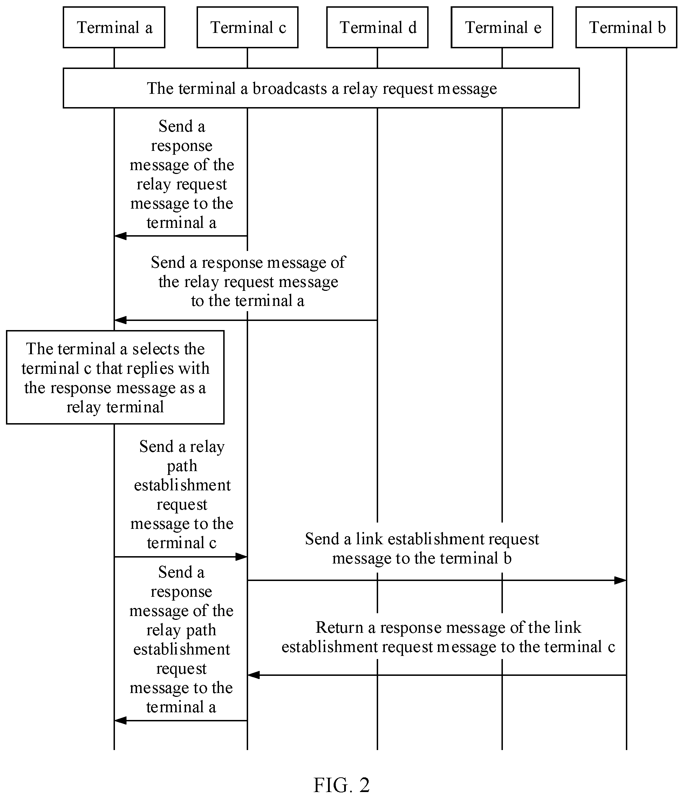

Before this application is described, a current relay link establishment process is first described with reference to FIG. 2.
(1) A terminal a needs to communicate with a terminal b, but the terminal a cannot directly discover the terminal b. In other words, the terminal a and the terminal b are not within a short-distance communication range, and cannot directly communicate with each other. To find a relay terminal used for communication between the terminal a and the terminal b, the terminal a broadcasts a relay request message. The relay request message includes an application layer identifier of the terminal a (an ID of the terminal a) and an application layer identifier of the terminal b.
(2) After receiving the relay request message, terminals (for example, a terminal c, a terminal d, and a terminal e) near the terminal a determine, based on local information, whether the terminals can be used as relay terminals for communication between the terminal a and the terminal b. The local information includes but is not limited to at least one of the following information: whether a relay capability exists, a short-distance relationship with the terminal b, current processing load, and signal strength information with the terminal b. If the terminal c and the terminal d can be determined as relay terminals for communication between the terminal a and the terminal b, the terminal c sends a response message to the terminal a, where the response message includes an application layer identifier of the terminal c. The terminal d sends a response message to the terminal a, where the response message includes an application layer identifier of the terminal d.
   If there is no information about a distance relationship with the terminal b in a terminal near the terminal a, the terminal may initiate a near-distance discovery procedure (ProSe discovery) to determine whether the terminal is within a near-distance range from the terminal b, or periodically initiate a near-distance discovery procedure to obtain information about a surrounding terminal.
(3) The terminal a selects one of terminals (the terminal c and the terminal d) that reply with the response message as the relay terminal. If the terminal c is selected as the relay terminal, the terminal a sends a relay path establishment request message to the terminal c, where the relay path establishment request message includes the application layer identifier of the terminal b, QoS information, and a data link layer address of the terminal a (where the data link layer address may also be referred to as a layer 2 address (Layer 2 ID), for example, may be a tunnel endpoint identifier (Tunnel Endpoint ID)).
(4) An authentication-and-security-related procedure is performed between the terminal a and the terminal c.
(5) The terminal c sends a link establishment request message to the terminal b, where the link establishment request message includes the application layer identifier of the terminal c, the QoS, and a first data link layer address of the terminal c.
(6) The authentication-and-security-related procedure is performed between the terminal c and the terminal b.
(7) The terminal b returns a response message of the link establishment request message to the terminal c, where the response message includes indication information indicating whether the terminal b receives the link establishment request. If the terminal b receives the link establishment request, the response message further includes a first data link layer address of the terminal b. The first data link layer address of the terminal c and the first data link layer address of the terminal b uniquely identify a link between the terminal c and the terminal b.
(8) The terminal c sends a response message of the relay path establishment request message to the terminal a, where the response message of the relay path establishment request message includes an indication indicating that establishment of the link between the terminal c and the terminal b succeeds and a second data link layer address of the terminal c. The second data link layer address of the terminal c and the first data link layer address of the terminal a uniquely identify a link between the terminal c and the terminal a.

After the link between the terminal a and the terminal c and the link between the terminal c and the terminal b are established, the terminal a can send data to the terminal b.

It can be learned from the foregoing procedure that in a process of establishing a communication link between the terminal a, the terminal c, and the terminal b, a data link layer address is allocated to each of the terminal a and the terminal c. The pair of data link layer addresses is used to identify a link that is between the terminal a and the terminal c and that is used when the terminal c is used as the relay terminal between the terminal a and the terminal b. If the terminal a and the terminal c need to directly communicate with each other, another data link layer address is further allocated to each of the terminal a and the terminal c. The pair of data link layer addresses is used to identify a link that is between the terminal a and the terminal c and that is used when the terminal a and the terminal c directly communicate with each other. If the terminal a further needs to communicate with a terminal f, and the terminal c is also selected as the relay terminal, a data link layer address is further allocated to each of the terminal a and the terminal c. The pair of data link layer addresses is used to identify a link that is between the terminal a and the terminal c and that is used when the terminal c is used as the relay terminal between the terminal a and the terminal f. That is, there are a plurality of links between the terminal a and the terminal c, and the terminal a needs to maintain connectivity of the plurality of links. Consequently, link overheads are high.

To resolve the foregoing technical problem, a communication method in this application is provided. The following describes the communication method in this application by using specific embodiments.

FIG. 3 is a flowchart 1 of a communication method according to an embodiment of this application. The method in this embodiment includes the following steps.

Step S301: A relay terminal sends a first message to a first terminal. The relay terminal is a relay terminal used for communication between the first terminal and a second terminal. The first message includes first indication information, an application layer identifier of the second terminal, and a first address of the second terminal. The first indication information can indicate a first unicast link between the first terminal and the relay terminal.

For the first address of the second terminal in this embodiment, the first address of the second terminal may be but is not limited to the following several cases:

In a first case, the first address of the second terminal includes a network layer address of the second terminal. The network address of the second terminal may be allocated by the second terminal and then sent to the relay terminal, or may be allocated by the relay terminal.

In a second case, the first address of the second terminal includes a first data link layer address of the second terminal. The first data link layer address of the second terminal may be allocated by the second terminal and then sent to the relay terminal, that is, the first data link layer address of the second terminal is a data link layer address allocated by the second terminal when a second unicast link between the second terminal and the relay terminal is established.

In a third case, the first address of the second terminal includes a second data link layer address of the second terminal. The second data link layer address of the second terminal is allocated by the relay terminal.

In conclusion, the first address of the second terminal may be allocated by the second terminal, or may be allocated by the relay terminal. When the first terminal sends data to the second terminal by using the relay terminal, the first address of the second terminal may be carried, to identify that a destination receive end of the data is the second terminal.

For the first indication information in this embodiment, the first indication information includes a link identifier of the first unicast link; or the first indication information includes an application layer identifier of the relay terminal and an application layer identifier of the first terminal; or the first indication information includes a first data link layer address of the relay terminal and a first data link layer address of the first terminal.

The following describes this step in detail.

In one manner, before the relay terminal sends the first message to the first terminal, the method may further include that the relay terminal determines whether the first unicast link between the relay terminal and the first terminal exists.

A method for the relay terminal to determine whether the first unicast link between the relay terminal and the first terminal exists may be: The relay terminal determines whether there is, in one or more unicast link profiles (unicast link profiles) stored in the relay terminal, a unicast link profile in which a sender application layer identifier is the application layer identifier of the relay terminal and a receiver application layer identifier is the application layer identifier of the first terminal. If yes, that the first unicast link between the relay terminal and the first terminal exists is determined; or if not, that the first unicast link between the relay terminal and the first terminal does not exist is determined. It may be understood that, the unicast link profile that is stored in the relay terminal and in which the sender application layer identifier is the application layer identifier of the relay terminal and the receiver application layer identifier is the application layer identifier of the first terminal is a profile of the first unicast link corresponding to the relay terminal (where for ease of description, the profile of the first unicast link corresponding to the relay terminal is subsequently referred to as third information of the first unicast link).

The third information of the first unicast link may be as follows:
an application layer identifier of the relay terminal and a first data link layer address of the relay terminal; and
an application layer identifier of the first terminal and a first data link layer address of the first terminal.

The first data link layer address of the relay terminal and the first data link layer address of the first terminal uniquely identify the first unicast link, that is, the first data link layer address of the relay terminal corresponds to the first unicast link, and the first data link layer address of the first terminal corresponds to the first unicast link.

A determining result of determining, by the relay terminal, whether the first unicast link between the relay terminal and the first terminal exists includes the following two cases: Case 1: The relay terminal determines that the first unicast link between the relay terminal and the first terminal exists. Case 2: The relay terminal determines that the first unicast link between the relay terminal and the first terminal does not exist.

The following describes this step based on case 1.

If the relay terminal determines that the first unicast link between the relay terminal and the first terminal exists, the first terminal stores a profile of the first unicast link corresponding to the first terminal (where for ease of description, the profile of the first unicast link corresponding to the first terminal is subsequently referred to as first information of the first unicast link).

The first information of the first unicast link may be as follows:
an application layer identifier of the first terminal and a first data link layer address of the first terminal; and
an application layer identifier of the relay terminal and a first data link layer address of the relay terminal.

In this case, the first message sent by the relay terminal to the first terminal may include the first indication information, the application layer identifier of the second terminal, and the first address of the second terminal, and the first indication information can indicate the first unicast link between the first terminal and the relay terminal. The first message indicates the first terminal to add the second terminal as one receiver of the first unicast link, or in other words, the first message indicates the first terminal to update the first information of the first unicast link to obtain second information of the first unicast link. The second information of the first unicast link includes at least the first information of the first unicast link, the application layer identifier of the second terminal, and the first address of the second terminal. In this case, the first message may also be referred to as a link modification request message.

The first indication information includes a link identifier of the first unicast link; or the first indication information includes the application layer identifier of the relay terminal and the application layer identifier of the first terminal; or the first indication information includes the first data link layer address of the relay terminal and the first data link layer address of the first terminal. In an optional implementation, when the relay terminal establishes the first unicast link between the relay terminal and the first terminal, the relay terminal allocates a link identifier (first link identifier for short) to the first unicast link, and sends the first link identifier to the first terminal. When the first terminal establishes the first unicast link between the first terminal and the relay terminal, the first terminal allocates a link identifier (second link identifier for short) to the first unicast link, and sends the second link identifier to the relay terminal. Therefore, the link identifier of the first unicast link included in the first indication information may include: the first link layer identifier or the second link identifier. The link identifier of the first unicast link included in the first indication information may further include the first link layer identifier and the second link identifier. The first link identifier and the second link identifier may be the same or may not be the same.

In this case, the relay terminal determines that the first unicast link between the relay terminal and the first terminal exists, and the profile of the first unicast link stored in the first terminal already includes the first data link layer address of the relay terminal. Therefore, the first message may not include the first data link layer address of the relay terminal.

The following describes this step based on case 2.

If the relay terminal determines that the first unicast link between the relay terminal and the first terminal does not exist, it indicates that the first terminal does not store the first information of the first unicast link.

In a first solution, the first message may include the first indication information, the first data link layer address of the relay terminal, the application layer identifier of the second terminal, and the first address of the second terminal. The first message indicates the first terminal to establish the first unicast link between the first terminal and the relay terminal and add the second terminal as one receiver of the first unicast link, or the first message indicates to generate the first information of the first unicast link and update the first information of the first unicast link to obtain the second information of the first unicast link. The second information of the first unicast link includes the first information of the first unicast link, the application layer identifier of the second terminal, and the first address of the second terminal. In this case, the first message may also be referred to as a link establishment and modification request message.

The first indication information includes the application layer identifier of the relay terminal and the application layer identifier of the first terminal.

In this solution, because the relay terminal determines that the first unicast link between the relay terminal and the first terminal does not exist, the first message needs to carry the first data link layer address of the relay terminal, to indicate that the first terminal needs to first establish the first unicast link.

In a second solution, after the relay terminal determines that the first unicast link between the relay terminal and the first terminal does not exist and before the relay terminal sends the first message to the first terminal, the first unicast link is established, which specifically includes steps a1 and a2:
a1: The relay terminal sends a second message to the first terminal, where the second message includes the application layer identifier of the relay terminal and the first data link layer address of the relay terminal.

The second message indicates the first terminal to establish the first unicast link between the first terminal and the relay terminal and generate the first information of the first unicast link.

a2: The relay terminal receives a response message of the second message from the first terminal, where the response message of the second message includes the first data link layer address of the first terminal.

After the relay terminal receives the response message of the second message from the first terminal, the relay terminal generates the third information of the first unicast link, and the establishment of the first unicast link is completed.

In the second solution, for details of content included in the first message, information indicated by the first message, and the first indication information, refer to the foregoing step descriptions that are based on case 1. Details are not described herein again.

In the foregoing manner, before the relay terminal sends the first message to the first terminal, the relay terminal determines whether the first unicast link exists. In another manner, before the relay terminal sends the first message to the first terminal, the relay terminal does not determine whether the first unicast link between the relay terminal and the first terminal exists. In this case, for details of the content included in the first message, the information indicated by the first message, and the first indication information, refer to the first solution in the step descriptions that are based on case 2. Details are not described herein again.

Step S302: The first terminal updates the first information of the first unicast link based on the first message, to obtain updated second information of the first unicast link, where the second information of the first unicast link includes an application layer identifier of the second terminal and the first address.

In this embodiment, the application layer identifier of the second terminal and the first address of the second terminal that are in the first message may be referred to as information about the second terminal carried in the first message.

The following describes several specific implementations that the first terminal updates the first information of the first unicast link based on the first message to obtain the updated second information of the first unicast link.

A first specific implementation corresponds to case 1 in which the relay terminal determines that the first unicast link between the relay terminal and the first terminal exists, or corresponds to a second solution in case 2 in which the relay terminal determines that the first unicast link between the relay terminal and the first terminal does not exist.

After receiving the first message, the first terminal obtains the stored first information of the first unicast link based on the first indication information in the first message, and adds at least the information about the second terminal carried in the first message to the first information of the first unicast link to obtain the second information of the first unicast link.

A second specific implementation corresponds to the first solution in case 2 in which the relay terminal determines that the first unicast link between the relay terminal and the first terminal does not exist.

After receiving the first message, the first terminal determines, based on the first data link layer address of the relay terminal carried in the first message, that the first unicast link between the first terminal and the relay terminal needs to be first established, that is, the first data link layer address of the first terminal needs to be allocated to establish the first unicast link between the first terminal and the relay terminal. The first terminal generates the first information of the first unicast link based on the first indication information (the application layer identifier of the first terminal and the application layer identifier of the relay terminal) that can indicate the first unicast link, the first data link layer address of the relay terminal, and the first data link layer address of the first terminal allocated by the first terminal that are carried in the first message, and adds at least the information about the second terminal in the first message to the first information of the first unicast link to obtain the second information of the first unicast link. Alternatively, the first terminal generates the second information of the first unicast link based on the application layer identifier of the first terminal, the application layer identifier of the relay terminal, the first data link layer address of the relay terminal, the first data link layer address of the first terminal allocated by the first terminal, the application layer identifier of the second terminal, and the first address of the second terminal.

A third specific implementation corresponds to a case in which the relay terminal does not determine whether the first unicast link between the relay terminal and the first terminal exists. Before the first terminal updates the first information of the first unicast link based on the first message, to obtain the updated second information of the first unicast link, the method further includes: The first terminal determines, based on the first message, whether the first unicast link between the first terminal and the relay terminal is established (to be specific, the first terminal determines whether a unicast link profile (first information of the unicast link) whose sender application layer identifier is the application layer identifier of the first terminal in the first message and whose receiver application layer identifier is the application layer identifier of the relay terminal in the first message is stored). If yes, the first terminal adds at least the information about the second terminal in the first message to the first information of the first unicast link, to obtain the second information of the first unicast link. If not, the first terminal allocates the first data link layer address of the first terminal. Then, the first terminal generates the first information of the first unicast link based on the application layer identifier of the first terminal, the application layer identifier of the relay terminal, the first data link layer address of the relay terminal, and the first data link layer address of the first terminal allocated by the first terminal that are carried in the first message, and adds at least the information about the second terminal in the first message to the first information of the first unicast link to obtain the second information of the first unicast link. Alternatively, the first terminal generates the second information of the first unicast link based on the application layer identifier of the first terminal, the application layer identifier of the relay terminal, the first data link layer address of the relay terminal, the first data link layer address of the first terminal allocated by the first terminal, the application layer identifier of the second terminal, and the first address of the second terminal.

The following describes the second information of the first unicast link corresponding to the first address of the second terminal in several cases.

In a first case, when the first address of the second terminal includes the network layer address of the second terminal, the second information of the first unicast link may include the following information:
an application layer identifier of the first terminal and a first data link layer address of the first terminal;
an application layer identifier of the relay terminal and a first data link layer address of the relay terminal; and
an application layer identifier of the second terminal, a first data link address of the relay terminal, and a network layer address of the second terminal.

According to the invention, the first data link layer address of the relay terminal is associated with the application layer identifier of the relay terminal, and the first data link layer address of the relay terminal is further associated with the application layer identifier of the second terminal.

It may be understood that, in this case, information added to the first information of the first unicast link includes the application layer identifier of the second terminal, the first data link layer address of the relay terminal, and the network layer address of the second terminal.

In a second case, when the first address of the second terminal includes the first data link layer address of the second terminal, the second information of the first unicast link may include the following information:
an application layer identifier of the first terminal and a first data link layer address of the first terminal;
an application layer identifier of the relay terminal and a first data link layer address of the relay terminal; and
an application layer identifier of the second terminal and a first data link layer address of the second terminal.

The first data link layer address of the second terminal is associated with the application layer identifier of the second terminal. It may be understood that, in this case, the information added to the first information of the first unicast link includes the application layer identifier of the second terminal and the first data link layer address of the second terminal.

In a third case, when the first address of the second terminal includes the second data link layer address of the second terminal, the second information of the first unicast link may include the following information:
an application layer identifier of the first terminal and a first data link layer address of the first terminal;
an application layer identifier of the relay terminal and a first data link layer address of the relay terminal; and
an application layer identifier of the second terminal and a second data link layer address of the second terminal.

The second data link layer address of the second terminal is associated with the application layer identifier of the second terminal. It may be understood that, in this case, the information added to the first information of the first unicast link includes the application layer identifier of the second terminal and the second data link layer address of the second terminal.

Optionally, after obtaining the second information of the first unicast link, the first terminal may further send a response message of the first message to the relay terminal. The response message of the first message indicates that the update of the second information of the first unicast link is completed, that is, indicates to the relay terminal that the first terminal has obtained the second information of the first unicast link.

After obtaining the second information of the first unicast link, the first terminal may send the first data to the relay terminal based on the second information of the first unicast link. The first data includes the first address of the second terminal, and the first address of the second terminal indicates that a destination receive end of the first data is the second terminal.

In this embodiment, when the second terminal needs to communicate with the first terminal by using the relay terminal, and the unicast link has been established between the first terminal and the relay terminal, a new unicast link between the relay terminal and the first terminal is no longer established (that is, a profile of the new unicast link between the relay terminal and the first terminal is no longer generated). Instead, the information about the second terminal is added to the original unicast link profile as new receiver information, so that links that need to be maintained between the first terminal and the relay terminal (that is, whether the link is alive is detected through PC5 signaling) are reduced, and overheads of link maintenance are reduced.

In this embodiment, when the second terminal needs to communicate with the first terminal by using the relay terminal, and the unicast link does not exist between the first terminal and the relay terminal, when the unicast link between the first terminal and the relay terminal is established, not only the profile of the unicast link between the first terminal and the relay terminal is generated, but also the information about the second terminal is added to the unicast link profile as new receiver information to obtain an updated unicast link profile. In this way, both direct communication between the relay terminal and the first terminal and communication between the second terminal and the first terminal implemented by using the relay terminal as a relay may be implemented based on the updated unicast link profile. It is equivalent to that a same unicast link established between the relay terminal and the first terminal is used for communication for various communication purposes between the relay terminal and the first terminal, so that links that need to be maintained between the first terminal and the relay terminal are reduced, and link maintenance overheads are reduced.

The following provides further descriptions by using specific embodiments.

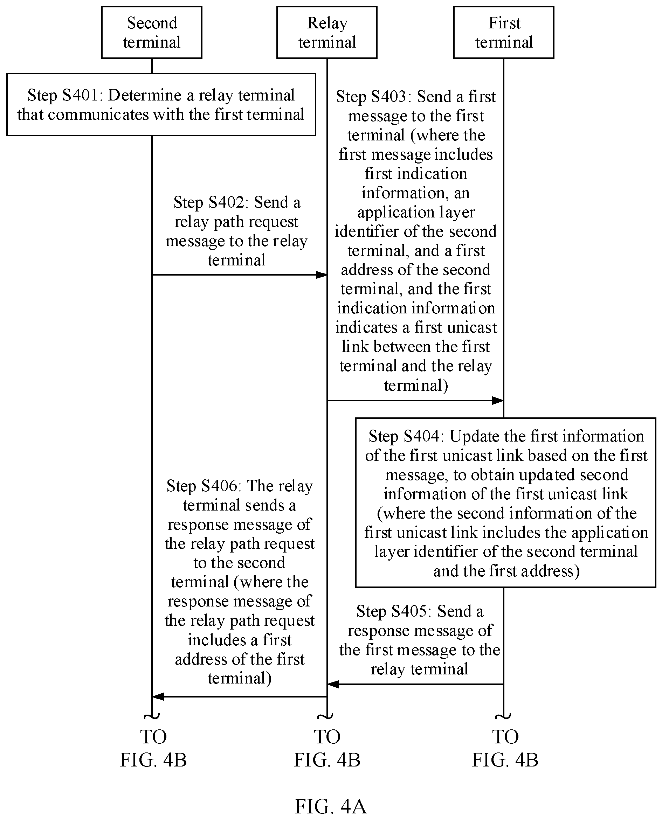

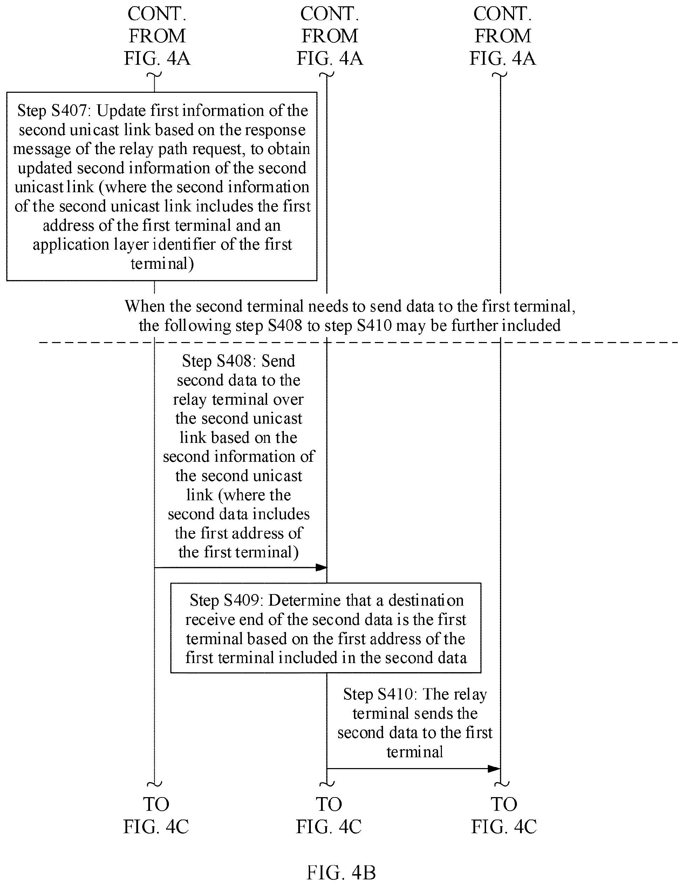

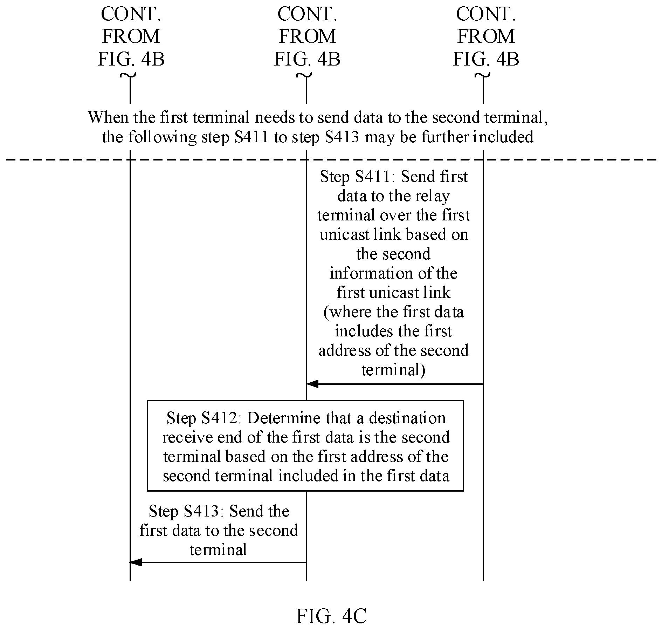

First, with reference to FIG. 4A, FIG. 4B, and FIG. 4C, a communication method corresponding to a relay link establishment process initiated by the second terminal is described.

FIG. 4A, FIG. 4B, and FIG. 4C are a flowchart 2 of a communication method according to an embodiment of this application. The method in this embodiment includes the following steps.

Step S401: A second terminal determines a relay terminal that communicates with a first terminal.

This embodiment is applicable to a scenario in which the second terminal needs to communicate with the first terminal, and after the second terminal determines that the first terminal cannot be directly discovered, the second terminal determines, through a relay discovery procedure, that the relay terminal is used as a relay terminal for communication between the first terminal and the second terminal. For the relay discovery procedure, refer to the foregoing method for determining, by the terminal device a, the terminal device c as a relay terminal in (1) to (3) in the current relay link establishment process. Details are not described herein again.

Step S402: The second terminal sends a relay path request message to a relay terminal.

The relay path request message may also be referred to as a relay communication request message or a non-direct communication request message.

In an optional manner, before the second terminal sends the relay path request message to the relay terminal, the method may further include the following c 1 to c4:
c1: The second terminal determines whether a second unicast link between the second terminal and the relay terminal has been established, and if not, the second terminal sends a link establishment request message to the relay terminal. The link establishment request message may include a first data link layer address of the second terminal and an application layer identifier of the second terminal.
c2: After receiving the link establishment request message, the relay terminal establishes the second unicast link between the relay terminal and the second terminal, that is, the relay terminal generates a profile of the second unicast link corresponding to the relay terminal, where the profile of the second unicast link corresponding to the relay terminal is subsequently referred to as third information of the second unicast link. The third information of the second unicast link includes the following information:
   an application layer identifier of the relay terminal and a second data link layer address of the relay terminal; and
   an application layer identifier of the second terminal and a first data link layer address of the second terminal.

It may be understood that the second data link layer address of the relay terminal is different from a first data link layer address of the relay terminal.

c3: After establishing the second unicast link between the relay terminal and the second terminal, the relay terminal sends a response message of the link establishment request message to the second terminal. The response message of the link establishment request message indicates that the second unicast link between the relay terminal and the second terminal has been established, and the response message of the link establishment request message includes the second data link layer address of the relay terminal.

c4: The second terminal establishes the second unicast link between the second terminal and the relay terminal, that is, generates a profile of the second unicast link corresponding to the second terminal (where the profile of the second unicast link corresponding to the second terminal is subsequently referred to as first information of the second unicast link).

The first information of the second unicast link includes the following information:
an application layer identifier of the second terminal and a first data link layer address of the second terminal; and
an application layer identifier of the relay terminal and a second data link layer address of the relay terminal.

Establishment of the second unicast link between the second terminal and the relay terminal is completed by using c1 to c4.

The relay path request message is described below.

If whether the second unicast link between the second terminal and the relay terminal is already established is not determined before the second terminal sends the relay path request message to the relay terminal, the relay path request message includes an application layer identifier of the first terminal, the application layer identifier of the second terminal, and a first data link layer address of the second terminal.

If before the second terminal sends the relay path request message to the relay terminal, that the second unicast link between the second terminal and the relay terminal has been established or the foregoing steps c1 to c4 have been performed is determined, the relay path request message may include the application layer identifier of the first terminal and the application layer identifier of the second terminal. Optionally, the relay path request message may further include the first data link layer address of the second terminal.

Step S403: The relay terminal sends a first message to the first terminal. The first message includes first indication information, the application layer identifier of the second terminal, and the first address of the second terminal.

The relay terminal receives the relay path request message, and then the relay terminal sends the first message to the first terminal.

The first indication information can indicate the first unicast link between the first terminal and the relay terminal. The first message may be specifically the relay path request message, a relay communication request message, an indirect communication request message, a link establishment and modification request message, or a link modification request message.

For specific implementation of this step, refer to the descriptions in step S301 in the embodiment shown in FIG. 3. Details are not described herein again.

Optionally, the first address of the second terminal is the first data link layer address of the second terminal. In an optional implementation, the relay terminal determines the second unicast link based on the first message, and obtains third information of the second unicast link. A data link layer address that is in the third information and that is associated with the application layer identifier of the second terminal may be used as the first data link layer address of the second terminal. In another optional implementation, the relay terminal learns of, by receiving the relay path request message in S402, the first data link layer address of the second terminal included in the message.

Optionally, the first address of the second terminal is the second data link layer address of the second terminal. In an optional implementation, the second data link layer address of the second terminal is allocated by the relay terminal.

Optionally, the first address of the second terminal is the network layer address of the second terminal. In an optional implementation, the network layer address of the second terminal is allocated by the second terminal. The relay path request message in S402 may further include the network layer address of the second terminal, and the relay terminal learns the network layer address of the second terminal by receiving the relay path request message. In another optional implementation, the network layer address of the second terminal is allocated by the relay terminal.

Step S404: The first terminal updates the first information of the first unicast link based on the first message, to obtain updated second information of the first unicast link.

The first terminal receives the first message, and then the first terminal updates the first information of the first unicast link based on the first message, to obtain the updated second information of the first unicast link.

The second information includes the application layer identifier of the second terminal and the first address of the second terminal.

For specific implementation of this step, refer to the descriptions in step S302 in the embodiment shown in FIG. 3. Details are not described herein again.

Step S405: The first terminal sends a response message of the first message to the relay terminal. The response message of the first message indicates that the update of the second information of the first unicast link is completed.

In an optional solution, the response message of the first message may carry a network layer address of the first terminal and/or a first data link layer address of the first terminal.

Step S406: The relay terminal sends a response message of the relay path request to the second terminal. The response message of the relay path request includes a first address of the first terminal.

The relay terminal receives the response message of the first message, and then the relay terminal sends the response message of the relay path request to the second terminal.

After receiving the response message of the first message, the relay terminal determines that the first information of the first unicast link has been updated to obtain the second information of the first unicast link, and then the relay terminal sends the response message of the relay path request to the second terminal.

If before the second terminal sends the relay path request message to the relay terminal, whether the second unicast link between the second terminal and the relay terminal has been established is not be determined, or the relay path request message carries the first data link layer address of the second terminal, before the relay terminal sends the response message of the relay path request to the second terminal, the method may further include: The relay terminal determines whether the second unicast link between the relay terminal and the second terminal has been established. If not, the relay terminal establishes the second unicast link between the relay terminal and the second terminal, that is, the relay terminal generates the third information of the second unicast link. Correspondingly, in addition to the first address of the first terminal, the response message of the relay path request further needs to carry the second data link layer address of the relay terminal. If yes, the response message of the relay path request may not carry the second data link layer address of the relay terminal.

If the relay path request message received by the relay terminal does not carry the first data link layer address of the second terminal, the relay terminal may determine that the second unicast link between the relay terminal and the second terminal has been established, and the response message of the relay path request may not carry the second data link layer address of the relay terminal.

If whether the second unicast link between the second terminal and the relay terminal has been established is not determined before the second terminal sends the relay path request message to the relay terminal, and whether the second unicast link between the second terminal and the relay terminal has been established is not determined before the relay terminal sends the response message of the relay path request to the second terminal, in addition to the first address of the first terminal, the response message of the relay path request further needs to carry the second data link layer address of the relay terminal.

Optionally, the response message of the relay path request may further carry an application layer identifier of the first terminal.

Optionally, the response message of the relay path request may further carry second indication information, where the second indication information can indicate the second unicast link between the second terminal and the relay terminal. The second indication information may be the identifier of the second unicast link, or may be the application layer identifier of the second terminal and the application layer identifier of the relay terminal, or may be the first data link layer address of the second terminal and the second data link layer address of the relay terminal. It may be understood that, if before the relay terminal sends the response message of the relay path request, that the second unicast link between the second terminal and the relay terminal is established is already determined, the second indication information may be any one of the foregoing. Before the relay terminal sends the response message of the relay path request, the relay terminal does not determine whether the second unicast link between the second terminal and the relay terminal has been established or determines that the second unicast link between the second terminal and the relay terminal is not established. In this case, the second indication information may be the application layer identifier of the second terminal and the application layer identifier of the relay terminal.

The first address of the first terminal includes but is not limited to the following several cases:

In a first case, the first address of the first terminal includes a network layer address of the first terminal. The network address of the first terminal may be allocated by the first terminal and then sent to the relay terminal (for example, by being carried in the response message of the first message in step S405), or may be allocated by the relay terminal to the first terminal.

In a second case, the first address of the first terminal includes a first data link layer address of the first terminal. The first data link layer address of the first terminal may be allocated by the first terminal and then sent to the relay terminal, so that the relay terminal establishes the first unicast link between the first terminal and the relay terminal. For example, the first data link layer address of the first terminal is carried in the response message of the first message in step S405.

In a third case, the first address of the first terminal includes a second data link layer address of the first terminal, and the second data link layer address of the first terminal is allocated by the relay terminal.

In conclusion, the first address of the first terminal may be allocated by the first terminal, or may be allocated by the relay terminal.

Step S407: The second terminal updates the first information of the second unicast link based on the response message of the relay path request to obtain updated second information of the second unicast link.

The second terminal receives the response message of the relay path request, and the second terminal updates the first information of the second unicast link based on the response message of the relay path request to obtain the updated second information of the second unicast link.

The second unicast link is a unicast link between the second terminal and the relay terminal. The second information of the second unicast link includes the first address of the first terminal and the application layer identifier of the first terminal.

In correspondence to a case in which the relay terminal determines that the first unicast link between the relay terminal and the second terminal exists, after the second terminal receives the response message of the relay path request, the second terminal determines, based on that the response message of the relay path request does not carry the second data link layer address of the relay terminal, that the second unicast link is established between the second terminal and the relay terminal. Then, the second terminal obtains stored first information of the second unicast link, and adds at least the first address of the first terminal and the application layer identifier of the first terminal to the first information of the second unicast link, to obtain the second information of the second unicast link.

In correspondence to a case in which the relay terminal determines that the second unicast link between the relay terminal and the second terminal does not exist, after receiving the response message of the relay path request, the second terminal determines, based on the second data link layer address of the relay terminal carried in the response message of the relay path request, that the first data link layer address of the second terminal needs to be allocated. The second terminal generates the first information of the second unicast link based on the application layer identifier of the second terminal, the application layer identifier of the relay terminal, the second data link layer address of the relay terminal that is carried in the response message of the relay path request, and the first data link layer address of the second terminal that is allocated by the second terminal, and adds at least the first address of the first terminal and the application layer identifier of the first terminal to the first information of the second unicast link to obtain the second information of the second unicast link. Alternatively, the second terminal generates the second information of the second unicast link based on the application layer identifier of the second terminal, the application layer identifier of the relay terminal, the second data link layer address of the relay terminal carried in the response message of the relay path request, the first data link layer address of the second terminal that is allocated by the second terminal, the first address of the first terminal, and the application layer identifier of the first terminal.

In correspondence to a case in which the relay terminal does not determine whether the second unicast link between the relay terminal and the second terminal exists, before the second terminal updates the first information of the second unicast link based on the response message of the relay path request to obtain the updated second information of the second unicast link, the method further includes: The second terminal determines, based on the response message of the relay path request, whether the second unicast link between the second terminal and the relay terminal has been established. That is, the second terminal determines whether a unicast link profile in which the sender application layer identifier is the application layer identifier of the second terminal and the receiver application layer identifier is the application layer identifier of the relay terminal is stored, that is, determines whether the first information of the second unicast link exists. If yes, the second terminal adds at least the first address of the first terminal and the application layer identifier of the first terminal to the first information of the second unicast link to obtain the second information of the second unicast link. If not, the second terminal allocates the first data link layer address of the second terminal. Then the second terminal generates the first information of the second unicast link based on the application layer identifier of the second terminal, the application layer identifier of the relay terminal, the second data link layer address of the relay terminal that is carried in the response message of the relay path request, and the first data link layer address of the second terminal that is allocated by the second terminal, and adds at least the first address of the first terminal and the application layer identifier of the first terminal to the first information of the second unicast link to obtain the second information of the second unicast link. Alternatively, the second terminal generates the second information of the second unicast link based on the application layer identifier of the second terminal, the application layer identifier of the relay terminal, the second data link layer address of the relay terminal carried in the response message to the relay path request, the first data link layer address of the second terminal that is allocated by the second terminal, the first address of the first terminal, and the application layer identifier of the first terminal.

The following describes the second information of the second unicast link corresponding to the first address of the first terminal in different cases.

When the first address of the first terminal includes the network layer address of the first terminal, the second information of the second unicast link may include the following information:
an application layer identifier of the second terminal and a first data link layer address of the second terminal;
an application layer identifier of the relay terminal and a second data link layer address of the relay terminal; and
an application layer identifier of the first terminal, a second data link address of the relay terminal, and a network layer address of the first terminal.

It may be understood that, in this case, information added to the first information of the second unicast link includes the application layer identifier of the first terminal, the second data link layer address of the relay terminal, and the network layer address of the first terminal. The second data link layer address of the relay terminal is associated with the application layer identifier of the relay terminal, and the second data link layer address of the relay terminal is further associated with the application layer identifier of the first terminal.

When the first address of the first terminal includes the first data link layer address of the first terminal, the second information of the second unicast link may include the following information:
an application layer identifier of the second terminal and a first data link layer address of the second terminal;
an application layer identifier of the relay terminal and a second data link layer address of the relay terminal; and
an application layer identifier of the first terminal and a first data link layer address of the first terminal.

It may be understood that, in this case, the information added to the first information of the second unicast link includes the application layer identifier of the first terminal and the first data link layer address of the first terminal.

When the first address of the first terminal includes the second data link layer address of the first terminal, the second information of the second unicast link may include the following information:
an application layer identifier of the second terminal and a first data link layer address of the second terminal;
an application layer identifier of the relay terminal and a second data link layer address of the relay terminal; and
an application layer identifier of the first terminal and a second data link layer address of the first terminal.

It may be understood that, in this case, the information added to the first information of the second unicast link includes: the application layer identifier of the first terminal, and the second data link layer address of the first terminal, where the application layer identifier of the first terminal is associated with the second data link layer address of the first terminal.

When the second terminal needs to send data to the first terminal, the following step S408 to step S410 may be further included.

Step S408: The second terminal sends second data to the relay terminal over the second unicast link based on the second information of the second unicast link.

The second data includes a first address of the first terminal, and the first address of the first terminal indicates that a destination receive end of the second data is the first terminal.

When the first address of the first terminal includes the network layer address of the first terminal, the second data further includes the first data link layer address of the second terminal, the network layer address of the second terminal, and the second data link layer address of the relay terminal.

When the first address of the first terminal includes the first data link layer address of the first terminal, the second data further includes the first data link layer address of the second terminal.

When the first address of the first terminal includes the second data link layer address of the first terminal, the second data further includes the first data link layer address of the second terminal.

Step S409: The relay terminal determines that the destination receive end of the second data is the first terminal based on the first address of the first terminal included in the second data.

The relay terminal receives the second data, and determines that the destination receive end of the second data is the first terminal based on the first address of the first terminal included in the second data.

When the first address of the first terminal includes the network layer address of the first terminal or includes the second data link layer address of the first terminal, the relay terminal stores a correspondence between the first address of the first terminal and the first terminal, and the relay terminal determines that the destination receive end of the second data is the first terminal based on the correspondence.

When the first address of the first terminal includes the first data link layer address of the first terminal, the relay terminal determines that the destination receive end of the second data is the first terminal based on the first data link layer address of the first terminal.

Step S410: The relay terminal sends the second data to the first terminal over the first unicast link between the relay terminal and the first terminal.

When the first terminal needs to send data to the second terminal, the following step S411 to step S413 may be further included.

Step S411: The first terminal sends first data to the relay terminal over the first unicast link based on the second information of the first unicast link. The first data includes a first address of the second terminal, and the first address of the second terminal indicates that a destination receive end of the first data is the second terminal.

When the first address of the second terminal includes the network layer address of the second terminal, the first data further includes the first data link layer address of the first terminal, the network layer address of the first terminal, and the first data link layer address of the relay terminal.

When the first address of the second terminal includes the first data link layer address of the second terminal, the first data further includes the first data link layer address of the first terminal.

When the first address of the second terminal includes the second data link layer address of the second terminal, the first data further includes the first data link layer address of the first terminal.

Step S412: The relay terminal determines that the destination receive end of the first data is the second terminal based on the first address of the second terminal included in the first data.

The relay terminal receives the first data, and determines that the destination receive end of the first data is the second terminal based on the first address of the first terminal included in the first data.

When the first address of the second terminal includes the network layer address of the second terminal or includes the second data link layer address of the second terminal, the relay terminal stores a correspondence between the first address of the second terminal and the second terminal, and the relay terminal determines that the destination receive end of the first data is the second terminal based on the correspondence.

When the first address of the second terminal includes the first data link layer address of the second terminal, the relay terminal determines that the destination receive end of the first data is the second terminal based on the first data link layer address of the second terminal.

Step S413: The relay terminal sends the first data to the second terminal over the second unicast link between the relay terminal and the second terminal.

The method in this embodiment can reduce overheads of link maintenance performed by a terminal.

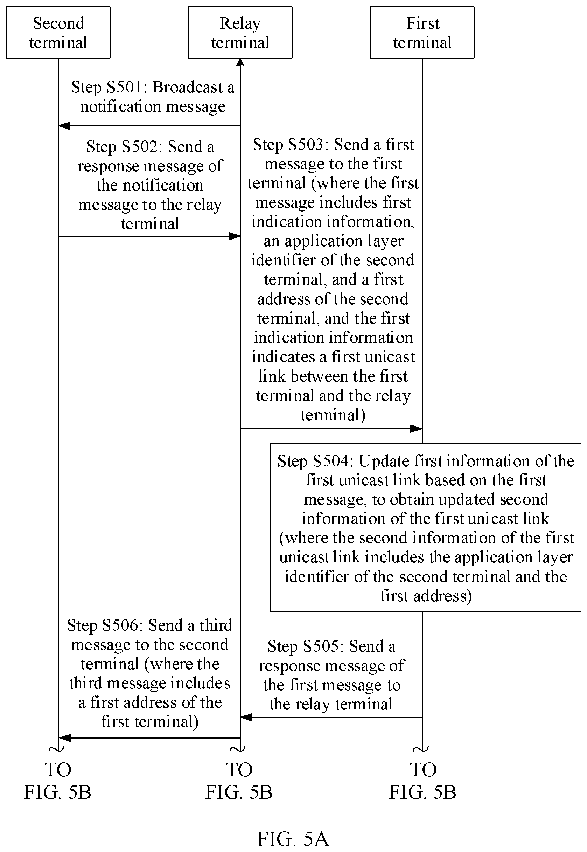

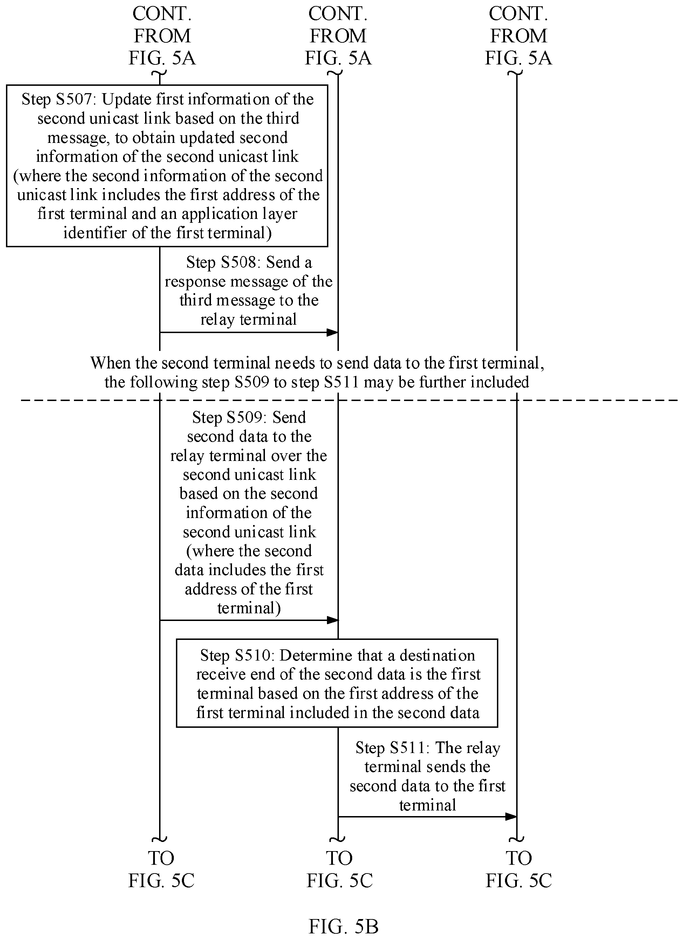

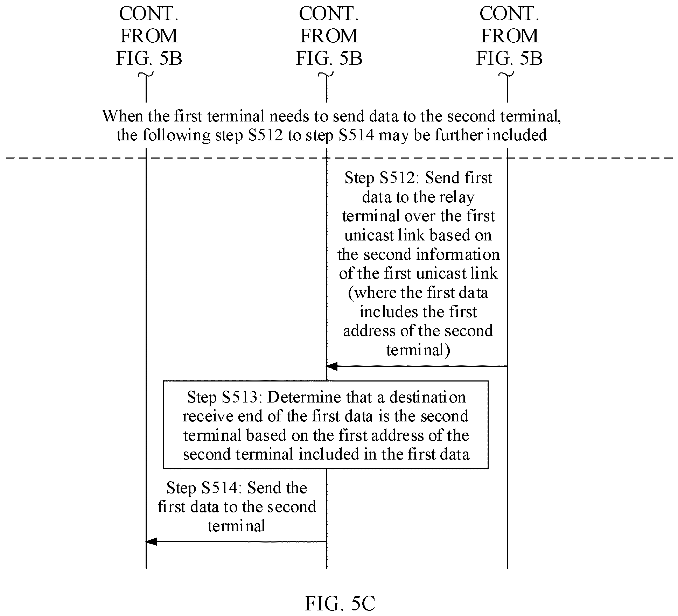

Next, with reference to FIG. 5A, FIG. 5B, and FIG. 5C, a communication method corresponding to a relay link establishment process initiated by the relay terminal is described.

FIG. 5A, FIG. 5B, and FIG. 5C are a flowchart 3 of a communication method according to an embodiment of this application. The method in this embodiment includes the following steps.

Step S501: A relay terminal broadcasts a notification message.

After the relay terminal determines that the relay terminal can directly communicate with a first terminal, the relay terminal broadcasts the notification message. The notification message indicates that the relay terminal can serve as a relay, so that another terminal can communicate with the first terminal, and the notification message includes an application layer identifier of the first terminal.

Step S502: A second terminal sends a response message of the notification message to the relay terminal.

After receiving the notification message, when determining that the second terminal needs to communicate with the first terminal, the second terminal returns the response message of the notification message to the relay terminal. Optionally, the second terminal may further return the response message of the notification message to the relay terminal after determining that the second terminal needs to communicate with the first terminal and cannot discover the first terminal through a direct discovery procedure. It may be understood that if the second terminal can discover the first terminal through the direct discovery procedure, the second terminal may not return the response message to the relay terminal.

The response message of the notification message includes the application layer identifier of the first terminal, an application layer identifier of the second terminal, and a first data link layer address of the second terminal, to indicate that the second terminal needs to communicate with the first terminal.

Step S503: The relay terminal sends a first message to the first terminal. The first message includes first indication information, an application layer identifier of the second terminal, and a first address of the second terminal. The first indication information can indicate a first unicast link between the first terminal and the relay terminal.

For specific implementation of this step, refer to the descriptions in step S301 in the embodiment shown in FIG. 3. Details are not described herein again.

Step S504: The first terminal updates first information of the first unicast link based on the first message, to obtain updated second information of the first unicast link. The second information includes the application layer identifier of the second terminal and the first address of the second terminal.

For specific implementation of this step, refer to the descriptions in step S302 in the embodiment shown in FIG. 3. Details are not described herein again.

Step S505: The first terminal sends a response message of the first message to the relay terminal. The response message of the first message indicates that the update of the second information of the first unicast link is completed.

For specific implementation of this step, refer to the descriptions in step S405 in the embodiment shown in FIG. 4A. Details are not described herein again.

Step S506: The relay terminal sends a third message to the second terminal. The third message includes the first address of the first terminal.

After receiving the response message of the first message, the relay terminal determines that the first information of the first unicast link has been updated to obtain the second information of the first unicast link, and then the relay terminal sends the third message to the second terminal.

Before the relay terminal sends the third message to the second terminal, the method may further include: The relay terminal determines whether the second unicast link between the second terminal and the relay terminal has been established. If not, the relay terminal establishes the second unicast link between the relay terminal and the second terminal, that is, the relay terminal generates the third information of the second unicast link. Correspondingly, in addition to the first address of the first terminal, the third message further needs to carry a second data link layer address of the relay terminal. If yes, the third message may not carry the second data link layer address of the relay terminal.

If whether the second unicast link between the second terminal and the relay terminal has been established is not determined before the relay terminal sends the third message to the second terminal, the third message needs to carry the second data link layer address of the relay terminal in addition to the first address of the first terminal.

Optionally, the third message may further carry an application layer identifier of the first terminal.

Optionally, the third message may further carry second indication information, where the second indication information can indicate the second unicast link between the second terminal and the relay terminal. The second indication information may be an identifier of the second unicast link, or may be an application layer identifier of the second terminal and an application layer identifier of the relay terminal, or may be a first data link layer address of the second terminal and a second data link layer address of the relay terminal. It may be understood that, if before the relay terminal sends the third message, that the second unicast link between the second terminal and the relay terminal is established is already determined, the second indication information may be any one of the foregoing. Before the relay terminal sends the third message, the relay terminal does not determine whether the second unicast link between the second terminal and the relay terminal has been established or that the second unicast link between the second terminal and the relay terminal is not established. In this case, the second indication information may be the application layer identifier of the second terminal and the application layer identifier of the relay terminal.

Descriptions of the first address of the first terminal are the same as those in the embodiment shown in FIG. 4A, FIG. 4B, and FIG. 4C, and details are not described herein again.

Step S507: The second terminal updates the first information of the second unicast link based on the third message, to obtain updated second information of the second unicast link. The second information of the second unicast link includes the application layer identifier of the first terminal and the first address of the first terminal.

The second terminal receives the third message, and updates the first information of the second unicast link based on the third message, to obtain the updated second information of the second unicast link.

That the second terminal updates the first information of the second unicast link based on the third message, to obtain the updated second information of the second unicast link includes the following several specific implementations:

A first specific implementation corresponds to a case in which the relay terminal determines that the second unicast link between the relay terminal and the second terminal exists.

After the second terminal receives the third message, the second terminal determines, based on the second data link layer address of the relay terminal that is not carried in the third message, that the second unicast link exists, obtains stored first information of the second unicast link based on the application layer identifier of the second terminal and the application layer identifier of the relay terminal, and adds at least the first address of the first terminal and the application layer identifier of the first terminal to the first information of the second unicast link to obtain the second information of the second unicast link.

A second specific implementation corresponds to a case in which the relay terminal determines that the second unicast link between the relay terminal and the second terminal does not exist.

After receiving the third message, the second terminal determines, based on the second data link layer address of the relay terminal that is carried in the third message, that the first data link layer address of the second terminal needs to be allocated. The second terminal generates the first information of the second unicast link based on the application layer identifier of the second terminal, the application layer identifier of the relay terminal, the second data link layer address of the relay terminal that is carried in the third message, and the first data link layer address of the second terminal that is allocated by the second terminal, and adds at least the first address of the first terminal and the application layer identifier of the first terminal to the first information of the second unicast link to obtain the second information of the second unicast link. Alternatively, the second terminal generates the second information of the second unicast link based on the application layer identifier of the second terminal, the application layer identifier of the relay terminal, the second data link layer address of the relay terminal carried in the third message, the first data link layer address of the second terminal that is allocated by the second terminal, the first address of the first terminal, and the application layer identifier of the first terminal.

A third specific implementation corresponds to a case in which the relay terminal does not determine whether the second unicast link exists between the relay terminal and the second terminal.

Before the second terminal updates the first information of the second unicast link based on the third message, to obtain the updated second information of the second unicast link, the method further includes: The second terminal determines whether the second unicast link between the second terminal and the relay terminal has been established based on the third message. That is, the second terminal determines whether a unicast link profile in which a sender application layer identifier is the application layer identifier of the second terminal and a receiver application layer identifier is the application layer identifier of the relay terminal is stored, that is, the second terminal determines whether the first information of the second unicast link exists. If yes, the second terminal adds at least the first address of the first terminal and the application layer identifier of the first terminal to the first information of the second unicast link to obtain the second information of the second unicast link. If not, the second terminal allocates the first data link layer address of the second terminal, generates the first information of the second unicast link based on the application layer identifier of the second terminal, the application layer identifier of the relay terminal, the second data link layer address of the relay terminal that is carried in the third message, and the first data link layer address of the second terminal that is allocated by the second terminal, and adds at least the first address of the first terminal and the application layer identifier of the first terminal to the first information of the second unicast link, to obtain the second information of the second unicast link. Alternatively, the second terminal generates the second information of the second unicast link based on the application layer identifier of the second terminal, the application layer identifier of the relay terminal, the second data link layer address of the relay terminal carried in the third message, the first data link layer address of the second terminal that is allocated by the second terminal, the first address of the first terminal, and the application layer identifier of the first terminal.

For the first information of the second unicast link and the second information of the second unicast link, refer to the descriptions in the embodiment shown in FIG. 4A, FIG. 4B, and FIG. 4C. Details are not described herein again.

Step S508: The second terminal sends a response message of the third message to the relay terminal. The response message of the third message indicates that update of the second information of the second unicast link is completed.

When the second terminal needs to send data to the first terminal, the following step S509 to step S511 may be further included.

Step S509: The second terminal sends second data to the relay terminal over the second unicast link based on the second information of the second unicast link. The second data includes the first address of the first terminal, and the first address of the first terminal indicates that a destination receive end of the second data is the first terminal.

Step S510: The relay terminal determines that the destination receive end of the second data is the first terminal based on the first address of the first terminal included in the second data.

Step S511: The relay terminal sends the second data to the first terminal over the first unicast link between the relay terminal and the first terminal.

When the first terminal needs to send data to the second terminal, the following step S512 to step S514 may be further included.

Step S512: The first terminal sends first data to the relay terminal over the first unicast link based on the second information of the first unicast link. The first data includes a first address of the second terminal, and the first address of the second terminal indicates that a destination receive end of the first data is the second terminal.

Step S513: The relay terminal determines that the destination receive end of the first data is the second terminal based on the first address of the second terminal included in the first data.

Step S514: The relay terminal sends the first data to the second terminal over the second unicast link between the relay terminal and the second terminal.

For step S509 to step S514, refer to the descriptions of step S408 to step S413 in the embodiment shown in FIG. 4B and FIG. 4C. Details are not described herein again.

The method in this embodiment can reduce overheads of link maintenance performed by a terminal.

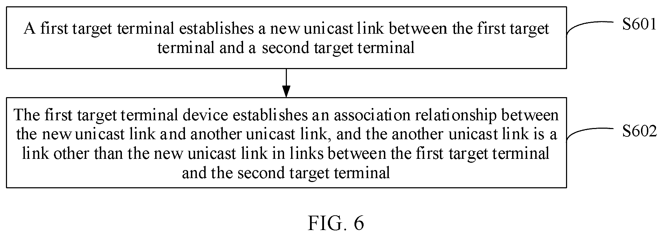

In addition, an embodiment of this application further provides another communication method for reducing overheads of link maintenance performed by a terminal. FIG. 6 is a flowchart 4 of a communication method according to an embodiment of this application. The method in this embodiment includes the following steps.

Step S601: A first target terminal establishes a new unicast link between the first target terminal and a second target terminal.

The first target terminal in this embodiment may be the first terminal, the second terminal, or the relay terminal in the foregoing embodiments. The second target terminal is any terminal that can establish a unicast link with the first target terminal.

Before the first target terminal establishes the new unicast link between the first target terminal and the second target terminal, a unicast link used for another communication purpose may have been established between the first target terminal and the second target terminal. For example, direct communication between a terminal A and a terminal B is a communication purpose between the terminal A and the terminal B, that the terminal A serves as a relay terminal to implement communication between a terminal C and the terminal B is another communication purpose between the terminal A and the terminal B, and that the terminal A is used as a relay terminal to implement communication between a terminal D and the terminal B is still another communication purpose between the terminal A and the terminal B.

For a process that the first target terminal establishes the new unicast link between the first target terminal device and the second target terminal, reference may be made to content of steps 5 to 7 in FIG. 2, and for the process, reference may also be made to a currently universal method.

Step S602: The first target terminal device establishes an association relationship between the new unicast link and another unicast link. The another unicast link is a link other than the new unicast link in links between the first target terminal and the second target terminal.

After establishing the new unicast link, the first target terminal may establish the association relationship between the new unicast link and the another unicast link.

In this embodiment, because unicast links between the two terminals are associated, a terminal only needs to check whether one of the unicast links between the two terminals is connected. If one of the unicast links between the two terminals is connected, it indicates that the two terminals can communicate with each other normally, and other unicast links are connected. Therefore, the method in this embodiment reduces overheads of link maintenance performed by a terminal, and is easy to implement.

The following describes a specific implementation of the embodiment shown in FIG. 6.

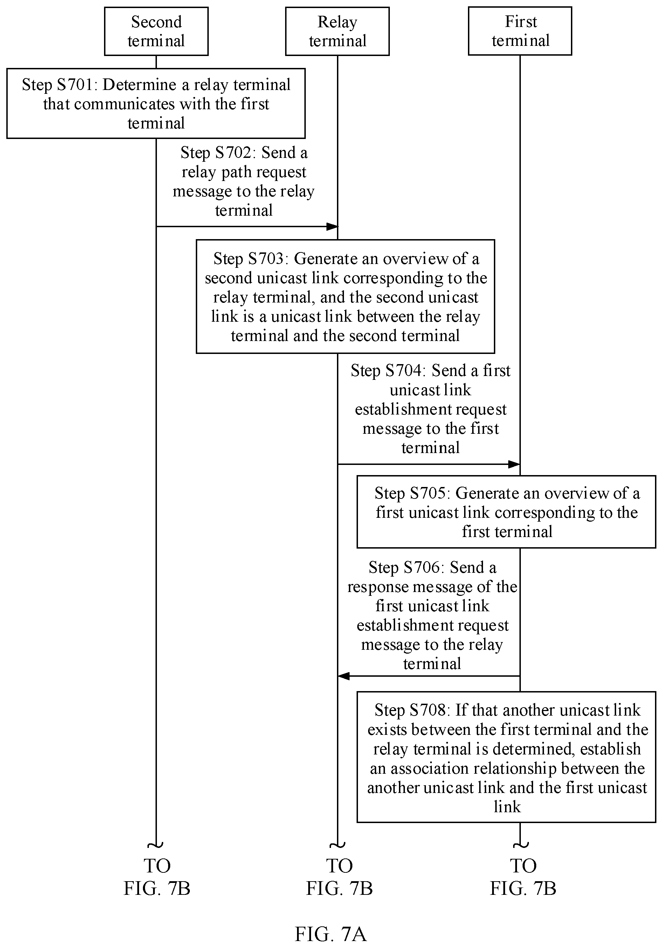

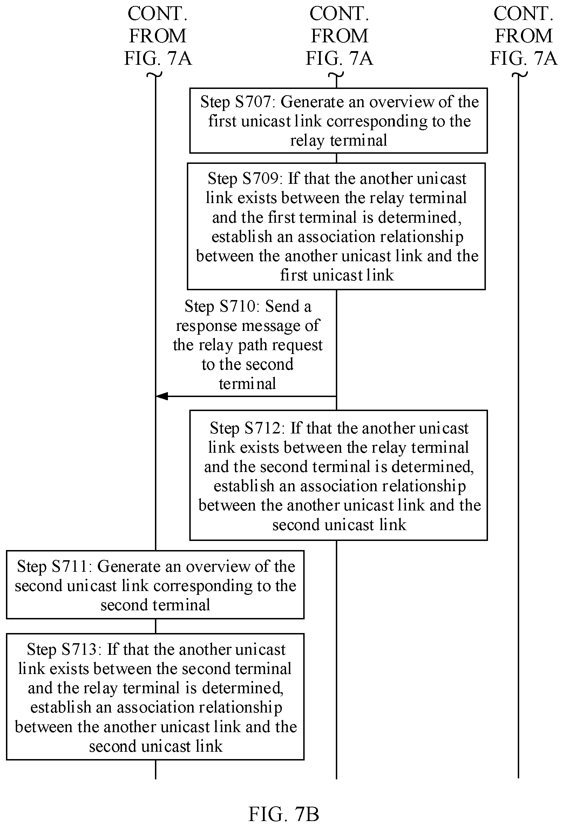

FIG. 7A and FIG. 7B are a flowchart 5 of a communication method according to an embodiment of this application. The method in this embodiment includes the following steps.

Step S701: A second terminal determines a relay terminal that communicates with a first terminal.

Step S702: The second terminal sends a relay path request message to a relay terminal.

Step S703: The relay terminal generates a profile of a second unicast link corresponding to the relay terminal. The second unicast link is a unicast link between the relay terminal and the second terminal.

The profile of the second unicast link corresponding to the relay terminal is third information of the second unicast link described above.

Step S704: The relay terminal sends a first unicast link establishment request message to a first terminal.

Step S705: The first terminal generates a profile of a first unicast link corresponding to the first terminal.

The first unicast link is a unicast link between the relay terminal and the first terminal.

The profile of the first unicast link corresponding to the first terminal is the same as the first information of the first unicast link described above.

For step S701 to step S705, refer to a current general method. Details are not described herein again.

Step S706: The first terminal sends a response message of the first unicast link establishment request message to the relay terminal.

Step S707: The relay terminal generates a profile of the first unicast link corresponding to the relay terminal.

According to step S704 to step S707, establishment of a first unicast link between the relay terminal and the first terminal is completed.

Step S708: If the first terminal determines that another unicast link exists between the first terminal and the relay terminal, the first terminal establishes an association relationship between the another unicast link and the first unicast link.

The first terminal determines whether the another unicast link exists between the first terminal and the relay terminal. In other words, the first terminal determines whether, in addition to the profile of the first unicast link corresponding to the first terminal, a profile of a unicast link whose sender application layer identifier is an application layer identifier of the first terminal and whose receiver application layer identifier is an application layer identifier of the relay terminal is stored in the first terminal. If it exists, the first terminal determines that the another unicast link exists between the first terminal and the relay terminal.

The first terminal establishes an association relationship between the another unicast link and the first unicast link, that is, establishes an association relationship between the profile of the first unicast link corresponding to the first terminal and a profile of the another unicast link between the first terminal and the relay terminal corresponding to the first terminal.

It may be understood that a sequence of performing step S708 and step S706 is not limited, and a sequence of performing step S707 and step S708 is not limited.

Step S709: If the relay terminal determines that the another unicast link exists between the relay terminal and the first terminal, the relay terminal establishes an association relationship between the another unicast link and the first unicast link.

After the relay terminal generates the profile of the first unicast link corresponding to the relay terminal, the relay terminal determines whether the another unicast link exists between the relay terminal and the first terminal, that is, determines whether, in addition to the profile of the first unicast link corresponding to the relay terminal, the relay terminal stores a profile of a unicast link whose sender application layer identifier is the application layer identifier of the relay terminal and whose receiver application layer identifier is the application layer identifier of the first terminal. If it exists, the relay terminal determines that the another unicast link exists between the relay terminal and the first terminal.

The relay terminal establishes an association relationship between the another unicast link and the first unicast link, that is, establishes an association relationship between the profile of the first unicast link corresponding to the relay terminal and a profile of the another unicast link between the relay terminal and the first terminal corresponding to the relay terminal.

Step S710: The relay terminal sends a response message of the relay path request to the second terminal.

It may be understood that a sequence of performing step S709 and step S710 is not limited.

Step S711: The second terminal generates a profile of the second unicast link corresponding to the second terminal.

In this case, establishment of the second unicast link between the relay terminal and the second terminal is completed.

Step S712: If the relay terminal determines that the another unicast link exists between the relay terminal and the second terminal, the relay terminal establishes an association relationship between the another unicast link and the second unicast link.

For a specific implementation of this step, refer to the specific implementation of establishing the association relationship between the another unicast link and the first unicast link if the relay terminal determines that the another unicast link exists between the relay terminal and the first terminal in step S709.

Step S713: If the second terminal determines that another unicast link exists between the second terminal and the relay terminal, the second terminal establishes an association relationship between the another unicast link and the second unicast link.

For specific implementation of this step, refer to the specific implementation of establishing the association relationship between the another unicast link and the first unicast link if the first terminal determines that the another unicast link exists between the first terminal and the relay terminal in step S708, and details are not described herein again.

For a process in which the first terminal needs to send data to the second terminal and a process in which the second terminal needs to send data to the first terminal, refer to a current method. Details are not described herein again.

The method in this embodiment reduces overheads of link maintenance performed by a terminal, and is easy to implement.

It should be understood that sequence numbers of the foregoing processes do not mean an execution sequence in various embodiments of this application. The execution sequence of the processes should be determined based on functions and internal logic of the processes, and should not be construed as any limitation on the implementation processes of the embodiments of this application.

The foregoing describes the methods in this application, and the following describes apparatuses in embodiments of this application.

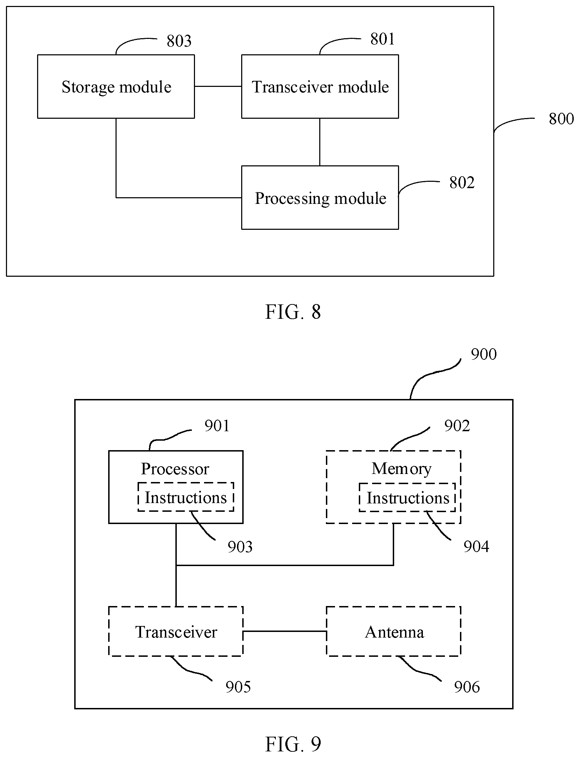

FIG. 8 is a schematic diagram of a structure of a communication apparatus according to an embodiment of this application. As shown in FIG. 8, the communication apparatus may be a first terminal, or may be a component (for example, an integrated circuit or a chip) of the first terminal. The communication apparatus may alternatively be a relay terminal, or may be a component (for example, an integrated circuit or a chip) of the relay terminal. The communication apparatus may be a second terminal, or may be a component (for example, an integrated circuit or a chip) of the second terminal. Alternatively, the communication apparatus may be another communication module, configured to implement the method in method embodiments of this application. The communication apparatus 800 may include a processing module 802 (a processing unit). Optionally, the communication apparatus 800 may further include a transceiver module 801 (a transceiver unit) and a storage module 803 (a storage unit).

In a possible design, one or more modules in FIG. 8 may be implemented by one or more processors, may be implemented by one or more processors and memories, may be implemented by one or more processors and transceivers, or may be implemented by one or more processors, memories, and transceivers. This is not limited in this embodiment of this application. The processor, the memory, and the transceiver may be disposed separately, or may be integrated.

The communication apparatus has a function of implementing the first terminal described in embodiments of this application. For example, the communication apparatus includes a corresponding module, unit, or means (means) used for the first terminal to perform the steps related to the first terminal that are described in embodiments of this application. The function, the unit, or the means (means) may be implemented by software or hardware, may be implemented by hardware executing corresponding software, or may be implemented by a combination of software and hardware. For details, refer to the corresponding descriptions in the foregoing corresponding method embodiments.

Alternatively, the apparatus has a function of implementing the relay terminal described in embodiments of this application. For example, the communication apparatus includes a corresponding module, unit, or means (means) used for the relay terminal to perform the steps related to the relay terminal that are described in embodiments of this application. The function, the unit, or the means (means) may be implemented by software or hardware, may be implemented by hardware executing corresponding software, or may be implemented by a combination of software and hardware. For details, refer to the corresponding descriptions in the foregoing corresponding method embodiments.

Alternatively, the apparatus has a function of implementing the second terminal described in embodiments of this application. For example, the communication apparatus includes a corresponding module, unit, or means (means) used for the second terminal to perform the steps related to the second terminal that are described in embodiments of this application. The function, the unit, or the means (means) may be implemented by software or hardware, may be implemented by hardware executing corresponding software, or may be implemented by a combination of software and hardware. For details, refer to the corresponding descriptions in the foregoing corresponding method embodiments.

Optionally, the modules in the communication apparatus 800 in this embodiment of this application may be configured to perform the method described in method embodiments of this application.

In a first possible design, a communication apparatus 800 may include a transceiver module 801 and a processing module 802.

The transceiver module 801 is configured to perform the receiving a first message from a relay terminal in step S301, step S403, and step S503. The relay terminal is a relay terminal used for communication between the communication apparatus and a second terminal, and the first message includes first indication information, an application layer identifier of the second terminal, and a first address of the second terminal. The first indication information can indicate a first unicast link between the communication apparatus and the relay terminal.

The processing module 802 is configured to perform the updating first information of the first unicast link based on the first message, to obtain updated second information of the first unicast link in step S302, step S404, and step S504. The second information includes the application layer identifier of the second terminal and the first address.

Optionally, the processing module 802 is further configured to perform controlling the transceiver module 801 to perform the sending first data to the relay terminal in step S410 and step S512 based on the second information of the first unicast link over the first unicast link in step S410 and step S512. The first data includes the first address, and the first address is configured to indicate that a destination receive end of the first data is the second terminal

Optionally, the transceiver module 801 is further configured to perform the sending a response message of the first message to the relay terminal in step S405 and step S505. The response message indicates that the update of the second information is complete.

Optionally, before the processing module 802 updates first information of the first unicast link based on the first message, the processing module 802 is further configured to perform the determining, based on the first message, that the first unicast link has been established in step S302, step S404, and step S504.

Optionally, the first address is allocated by the second terminal; or the first address is allocated by the relay terminal.

The communications apparatus 800 in the first possible design may be the first terminal or a component of the first terminal in the foregoing method embodiment. Correspondingly, the second terminal in the first possible design may be the second terminal in the foregoing method embodiment. Alternatively, the communication apparatus 800 in the first possible design apparatus may be the second terminal or a component of the second terminal in the foregoing method embodiment. Correspondingly, the second terminal in the first possible design may be the first terminal in the foregoing method embodiment.

In a second possible design, a communication apparatus 800 may include a transceiver module 801 and a processing module 802.

The processing module 802 is configured to perform the generating a first message in step S301, step S403, and step S503. The communication apparatus is an apparatus used for communication between a first terminal and a second terminal, and the first message includes first indication information, an application layer identifier of the second terminal, and a first address of the second terminal. The first indication information can indicate a first unicast link between the first terminal and the communication apparatus.

The transceiver module 801 is configured to perform the sending the first message to the first terminal in step S301, step S403, and step S503.

Optionally, the first address includes a network layer address of the second terminal or a data link layer address of the second terminal.

Optionally, the first message further includes a data link layer address of the communication apparatus. The data link layer address of the communication apparatus is associated with an application layer identifier of the communication apparatus.

Optionally, the first indication information includes a link identifier of the first unicast link.

Optionally, the first indication information includes a data link layer address of the first terminal and the data link layer address of the communication apparatus.

Optionally, before the transceiver module 801 sends the first message to the first terminal, the processing module 802 is further configured to perform the determining the first unicast link is established between the communication apparatus and the first terminal in step S301, step S403, and step S503.

Optionally, the transceiver module 801 is further configured to perform the receiving a response message of the first message from the first terminal in step S406 and step S506. The response message indicates that first information of the first unicast link has been updated to second information, and the second information includes the application layer identifier of the second terminal and the first address.

Optionally, the first address includes a network layer address of the second terminal. The transceiver module 801 is further configured to perform the receiving first data from the first terminal in step S412 and step S513. The first data includes a data link layer address of the first terminal, a network layer address of the first terminal, a data link layer address of the communication apparatus, and a network layer address of the second terminal. The processing module 802 is further configured to perform the determining, based on the network layer address of the second terminal, that a destination receive end of the first data is the second terminal in step S412 and step S513. The transceiver module 801 is further configured to perform the sending the first data to the second terminal in step S413 and step S514.

Optionally, the first address includes a data link layer address of the second terminal. The transceiver module 801 is further configured to perform the receiving first data from the first terminal in step S412 and step S513. The first data includes a data link layer address of the first terminal and the data link layer address of the second terminal. The processing module 802 is further configured to perform the determining, based on the data link layer address of the second terminal, that a destination terminal of the first data is the second terminal in step S412 and step S513. The transceiver module 801 is further configured to perform the sending the first data to the second terminal in step S413 and step S514.

In the second possible design, the communication apparatus 800 may be the relay terminal or a component of the relay terminal in the foregoing method embodiments. In the second possible design apparatus, the first terminal may be the first terminal in the foregoing method embodiments, and the second terminal may be the second terminal in the foregoing method embodiments. Alternatively, the first terminal in the second possible design apparatus may be the second terminal in the foregoing method embodiments, the second terminal may be the first terminal of the terminal in the foregoing method embodiments.

In a third possible design, a communication apparatus 800 may include a transceiver module 801 and a processing module 802.

The transceiver module 801 is configured to perform the receiving a response message of a relay path request message from a relay terminal in step S407. The relay terminal is a relay terminal used for communication between the communication apparatus and a first terminal. The response message of the relay path request message includes a first address of the first terminal.

The processing module 802 is configured to perform the updating the first information of the second unicast link according to the response message of the relay path request message, to obtain updated second information of the second unicast link in step S407. The second information of the second unicast link includes an application layer identifier of the first terminal and the first address of the first terminal, and the second unicast link is a unicast link between the communication apparatus and the relay terminal.

Optionally, the response message of the relay path request message further includes the application layer identifier of the first terminal.

Optionally, the first address of the first terminal includes a network layer address of the first terminal. The second information of the second unicast link further includes a data link layer address of the relay terminal. The data link layer address of the relay terminal is associated with an application layer identifier of the relay terminal, and the data link layer address of the relay terminal is further associated with the application layer identifier of the first terminal.

Optionally, the first address of the first terminal includes a data link layer address of the first terminal.

Optionally, the response message of the relay path request message further includes the data link layer address of the relay terminal.

Optionally, the processing module 802 is further configured to perform controlling the transceiver module 801 to perform the sending second data to the relay terminal, where the second data includes the first address, and the first address is configured to indicate that a destination receive end of the second data is the second terminal in step S408 based on the second information of the second unicast link over the second unicast link in step S408.

Optionally, before the transceiver module 801 receives the response message of the relay path request message from the relay terminal, the transceiver module 801 is further configured to perform the sending the relay path request message to the relay terminal in step S402. The relay path request message includes an application layer identifier of the communication apparatus and the application layer identifier of the first terminal.

Optionally, the relay path request message includes a data link layer address of the communication apparatus.

Optionally, before the second terminal receives the response message of the relay path request message from the relay terminal, the method further includes: The second terminal sends the relay path request message to the relay terminal. The relay path request message includes the application layer identifier of the second terminal and the application layer identifier of the first terminal.

Optionally, before the processing module 802 updates the first information of the second unicast link based on the response message of the relay path request message, the processing module 802 is further configured to perform the determining, based on the response message of the relay path request message, that the second unicast link has been established in step S407.

Optionally, the first address of the first terminal is allocated by the first terminal; or the first address of the first terminal is allocated by the relay terminal.

In the third possible design, the communication apparatus 800 may be the second terminal or a component of the second terminal in the foregoing method embodiments.

FIG. 9 is a schematic block diagram of an implementation of a communication device according to an embodiment of this application. The communication device in this embodiment may be the first terminal, the second terminal, or the relay terminal in the foregoing solution embodiments. Or may be a chip, a chip system, a processor, or the like that supports implementation of the foregoing method by the first terminal, the second terminal, or the relay terminal in the foregoing solution embodiments, or may be a chip, a chip system, a processor, or the like that supports implementation of the foregoing method. The communication device may be configured to implement the method described in the foregoing method embodiments. For details, refer to the descriptions in the foregoing method embodiments. The server may be a local server or a cloud server.

The communication device may include one or more processors 901. The processor 901 may also be referred to as a processing unit, and may implement a control function. The processor 901 may be a general purpose processor, a dedicated processor, or the like. For example, the processor may be a baseband processor or a central processing unit. The baseband processor may be configured to process a communication protocol and communication data. The central processing unit may be configured to: control a communication device (for example, a base station, a baseband chip, a terminal, a terminal chip, a DU, or a CU), execute a software program, and process data of the software program.

In an optional design, the processor 901 may also store instructions and/or data 903, and the instructions and/or the data 903 may be run by the processor, so that the communication device performs the method described in the foregoing method embodiments.

In another optional design, the processor 901 may include a transceiver unit configured to implement receiving and sending functions. For example, the transceiver unit may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

Optionally, the communication device may include one or more memories 902. The memory 902 may store instructions 904. The instructions may be run on the processor, so that the communication device performs the method described in the foregoing method embodiments. Optionally, the memory may further store data. Optionally, the processor may also store instructions and/or data. The processor and the memory may be separately disposed, or may be integrated together. For example, the correspondence described in the foregoing method embodiments may be stored in the memory or stored in the processor.

Optionally, the communication device may further include a transceiver 905 and/or an antenna 906. The processor 901 may be referred to as a processing unit, and controls the communication device. The transceiver 905 may be referred to as a transceiver unit, a transceiver, a transceiver circuit, a transceiver, or the like, and is configured to implement a receiving and sending function.

In a possible design, the transceiver 905 in FIG. 9 may be configured to perform step S301, step S403, step S406, step S410, and step S413 in the foregoing method embodiment, the processor 901 in FIG. 9 is configured to perform steps S302, S409, and step S412 in the foregoing method embodiments.

In still another possible design, the transceiver 905 in FIG. 9 may be configured to perform step S405 and step S411 in the foregoing method embodiment, and the processor 901 in FIG. 9 is configured to perform step S404 in the foregoing method embodiment.

In still another possible design, the transceiver 905 in FIG. 9 may be configured to perform step S402 and step S408 in the foregoing method embodiment, and the processor 901 in FIG. 9 is configured to perform step S401 and step S407 in the foregoing method embodiment.

In still another possible design, the transceiver 905 in FIG. 9 may be configured to perform S501, step S503, step S506, step S511, and step S514 in the foregoing method embodiment. The processor 901 in FIG. 9 is configured to perform step S510 and step S513 in the foregoing method embodiment.

In still another possible design, the transceiver 905 in FIG. 9 may be configured to perform step S505 and step S512 in the foregoing method embodiment, and the processor 901 in FIG. 9 is configured to perform step S504 in the foregoing method embodiment.

In still another possible design, the transceiver 905 in FIG. 9 may be configured to perform step S502, step S508, and step S509 in the foregoing method embodiment. The processor 901 in FIG. 9 is configured to perform step S507 in the foregoing method embodiment.

In still another possible design, the transceiver 905 in FIG. 9 may be configured to perform step S704 and step S710 in the foregoing method embodiment. The processor 901 in FIG. 9 is configured to perform step S703, step S707, step S709, and step S712 in the foregoing method embodiment.

In still another possible design, the transceiver 905 in FIG. 9 may be configured to perform step S706 in the foregoing method embodiment. The processor 901 in FIG. 9 is configured to perform step S705 and step S708 in the foregoing method embodiment.

In still another possible design, the transceiver 905 in FIG. 9 may be configured to perform step S702 in the foregoing method embodiment. The processor 901 in FIG. 9 is configured to perform step S701, step S711, and step S713 in the foregoing method embodiment.

In still another possible design, the processor 901 in FIG. 9 is configured to perform step S601 and step S602 in the foregoing method embodiment.

The processor and the transceiver described in this embodiment may be manufactured by using various IC process technologies, such as a complementary metal oxide semiconductor (complementary metal oxide semiconductor, CMOS), an n-type metal oxide semiconductor (nMetal-oxide-semiconductor, NMOS), a p-type metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

It should be understood that the processor in embodiments of this application may be an integrated circuit chip, and has a signal processing capability. In an implementation process, steps in the foregoing method embodiment may be implemented by using a hardware integrated logic circuit in the processor, or by using instructions in a form of software. The foregoing processor may be a general purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, or a discrete hardware component.

It may be understood that the memory in embodiments of this application may be a volatile memory or a nonvolatile memory, or may include both the volatile memory and the nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and the method described in this specification is intended to include but is not limited to these memories and any memory of another appropriate type.

A scope of the communication device described in embodiments of this application is not limited thereto, and a structure of the communication device may not be limited by FIG. 9. The communication device described in embodiments of this application may be an independent device or may be a part of a relatively large device.

In addition, the device shown in FIG. 9 may further be:
(1) an independent integrated circuit IC, or a chip system or subsystem;
(2) a set having one or more ICs. Optionally, the IC set may also include a storage component configured to store at least one of data or instructions;
(3) a module that can be embedded in another device; and
(4) a receiver, a terminal, an intelligent terminal, a cellular phone, a wireless device, a handset, a mobile unit, an in-vehicle device, a network device, a cloud device, an artificial intelligence device, or the like.

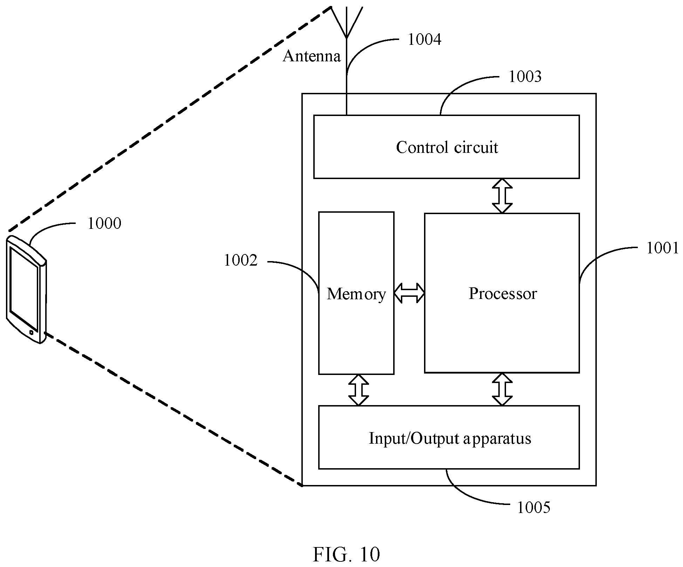

FIG. 10 is a schematic diagram of a structure of a terminal device according to an embodiment of this application. For ease of description, FIG. 10 shows only main components of the terminal device. As shown in FIG. 10, the terminal device 1000 includes a processor 1001, a memory 1002, a control circuit 1003, an antenna 1004, an input/output apparatus 1005, and a radio frequency circuit (not shown in the figure). The processor 1001 is mainly configured to: process a communication protocol and communication data, control the entire terminal, execute a software program, and process data of the software program. The memory 1002 is mainly configured to store the software program and data. The radio frequency circuit is mainly configured to perform conversion between a baseband signal and a radio frequency signal, and process a radio frequency signal. The antenna is mainly configured to receive and send the radio frequency signal in a form of an electromagnetic wave. The input/output apparatus 1005, for example, a touchscreen, a display screen, or a keyboard, is mainly configured to receive data entered by a user and output data to the user.

After the terminal device is powered on, the processor 1001 may read the software program in the memory 1002, parse and execute instructions of the software program, and process data of the software program. When data needs to be sent wirelessly, after performing baseband processing on the to-be-sent data, the processor 1001 outputs a baseband signal to a radio frequency circuit. The radio frequency circuit processes the baseband signal to obtain a radio frequency signal, and sends the radio frequency signal in an electromagnetic wave form by using the antenna. When data is sent to the terminal device, the radio frequency circuit receives a radio frequency signal by using the antenna. The radio frequency signal is further converted into a baseband signal, and the baseband signal is output to the processor 1001. The processor 1001 converts the baseband signal into data, and processes the data.

For ease of description, FIG. 10 shows only one memory 1002 and one processor 1001. In an actual terminal device, there may be a plurality of processors 1001 and memories 1002. The memory 1002 may also be referred to as a storage medium, a storage device, or the like. This is not limited in this embodiment of this application.

In an optional implementation, the processor 1001 may include a baseband processor and a central processing unit. The baseband processor is mainly configured to process a communication protocol and communication data. The central processing unit is mainly configured to control the entire terminal device, execute a software program, and process data of the software program. The processor 1001 in FIG. 10 integrates functions of the baseband processor and the central processing unit. A person skilled in the art may understand that the baseband processor and the central processing unit may alternatively be processors independent of each other, and are interconnected by using a technology such as a bus. A person skilled in the art may understand that the terminal device may include a plurality of baseband processors to adapt to different network standards, the terminal device may include a plurality of central processing units to enhance a processing capability of the terminal device, and all components of the terminal device may be connected to each other by using various buses. The baseband processor may also be expressed as a baseband processing circuit or a baseband processing chip. The central processing unit may also be expressed as a central processing circuit or a central processing chip. A function of processing the communication protocol and the communication data may be built in the processor 1001, or may be stored in the storage unit in a form of a software program, and the processor 1001 executes the software program to implement a baseband processing function.

In an example, the antenna 1004 having receiving and sending functions and the control circuit 1003 may be considered as a transceiver unit 1006 of the terminal device 1000, and the processor 1001 having a processing function may be considered as a processing unit 1007 of the terminal device 1000. As shown in FIG. 10, the terminal device 1000 includes a transceiver unit 1006 and a processing unit 1007. The transceiver unit may also be referred to as a transceiver, a transceiver, a transceiver apparatus, or the like. Optionally, a component that is in the transceiver unit 1006 and that is configured to implement a receiving function may be considered as a receiving unit, and a component that is in the transceiver unit 1006 and that is configured to implement a sending function may be considered as a sending unit. In other words, the transceiver unit 1006 includes the receiving unit and the sending unit. For example, the receiving unit may also be referred to as a receiver, a receiver, a receiver circuit, or the like. The sending unit may be referred to as a transmitter, a transmitter, a transmitter circuit, or the like. Optionally, the receiving unit and the sending unit may be one integrated unit, or may be a plurality of independent units. The receiving unit and the sending unit may be in one geographical position, or may be distributed in a plurality of geographical positions.

An embodiment of this application further provides a non-transitory computer readable storage medium storing computer instructions. The computer instructions are used to enable the computer to perform the method corresponding to the first terminal, the method corresponding to the second terminal, or the method corresponding to the relay terminal in the foregoing method embodiments.

When the foregoing embodiments are implemented by using software, all or some of the embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state disk, SSD)), or the like.

In several embodiments provided in this application, it should be understood that the disclosed system, apparatus, and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual coupling or direct coupling or communication connection may be implemented by using some interfaces. The indirect coupling or communication connection between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in the computer-readable storage medium. Based on such an understanding, the technical solutions in this application essentially, the part contributing to the current technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application.

The foregoing descriptions are merely specific implementations of this application, but the protection scope of this application is not limited thereto. The protection scope of this application shall be subject to the protection scope of the claims.

It should be understood that, an "embodiment" mentioned throughout this specification means that particular features, structures, or characteristics related to the embodiment are included in at least one embodiment of this application. Therefore, embodiments in the entire specification do not necessarily refer to a same embodiment. Moreover, the particular features, structures, or characteristics may be combined in one or more embodiments in any proper manner. It should be understood that sequence numbers of the foregoing processes do not mean execution sequence in various embodiments of this application. The execution sequence of the processes should be determined based on functions and internal logic of the processes, and should not be construed as any limitation on the implementation processes of embodiments of this application.

It should be further understood that, in this application, "when", "if", and "if" all mean that the terminal device or the server performs corresponding processing in an objective case, and are not time-limited, and the terminal device or the server is not necessarily required to perform a determining action during implementation, this does not mean that there is another limitation.

In this application, unless otherwise specified, an element represented in a singular form is intended to represent "one or more", but is not intended to represent "one and only one". In this application, unless otherwise specified, "at least one" is intended to represent "one or more", and "a plurality of" is intended to represent "two or more".

In addition, the term "and/or" in this specification describes only an association relationship for describing associated objects and represents that three relationships may exist. For example, A and/or B may represent the following three cases: Only A exists, both A and B exist, and only B exists. A may be singular or plural, and B may be singular or plural.

The character "/" usually indicates an "or" relationship between the associated objects.

The term "at least one of" in this specification indicates all or any combination of listed items. For example, "at least one of A, B, and C" may indicate the following six cases: Only A exists, only B exists, only C exists, both A and B exist, both B and C exist, and A, B, and C exist. A may be singular or plural, B may be singular or plural, and C may be singular or plural.

It should be understood that in embodiments of this application, "B corresponding to A" indicates that B is associated with A, and B may be determined based on A. However, it should be further understood that determining B based on A does not mean that B is determined based only on A. That is, B may also be determined based on A and/or other information.

## Claims

1. A communication method in a wireless communication network system with Device-to-Device communication, comprising:
receiving, by a first terminal, a first message from a relay terminal, wherein the relay terminal is a relay terminal used for communication between the first terminal and a second terminal, and the first message comprises first indication information, an application layer identifier of the second terminal, and a first address of the second terminal, wherein the first indication information can indicate a first unicast link between the first terminal and the relay terminal; and
updating (S302, S404, S504), by the first terminal, first information of the first unicast link based on the first message, to obtain updated second information of the first unicast link, wherein the second information comprises the application layer identifier of the second terminal and the first address;
wherein the first address comprises a network layer address of the second terminal; and
the second information further comprises a data link layer address of the relay terminal, **characterized in that** the data link layer address of the relay terminal is associated with an application layer identifier of the relay terminal, and the data link layer address of the relay terminal is further associated with the application layer identifier of the second terminal.

2. The method according to claim 1, further comprising:
sending, by the first terminal, first data to the relay terminal over the first unicast link based on the second information of the first unicast link, wherein the first data comprises the first address, and the first address indicates that a destination receive end of the first data is the second terminal.

3. The method according to claim 1 or 2, wherein the first indication information comprises a link identifier of the first unicast link.

4. The method according to any one of claims 1 to 3, wherein the first indication information comprises the data link layer address of the relay terminal and a data link layer address of the first terminal.

5. The method according to claim 4, wherein the first message further comprises the data link layer address of the relay terminal.

6. A communication method in a wireless communication network system with Device-to-Device communication, comprising:
generating, by a relay terminal, a first message, wherein the relay terminal is a relay terminal used for communication between a first terminal and a second terminal, and the first message comprises first indication information, an application layer identifier of the second terminal, and a first address of the second terminal, wherein the first indication information can indicate a first unicast link between the first terminal and the relay terminal; and
sending (S301, S403, S503), by the relay terminal, the first message to the first terminal,
wherein the first address comprises a network layer address of the second terminal,
wherein the first message further comprises a data link layer address of the relay terminal; **characterized in that**
the data link layer address of the relay terminal is associated with an application layer identifier of the relay terminal, and the data link layer address of the relay terminal is further associated with the application layer identifier of the second terminal.

7. The method according to claim 6, wherein the first indication information comprises a link identifier of the first unicast link.

8. The method according to claim 6 or 7, wherein the first indication information comprises a data link layer address of the first terminal and the data link layer address of the relay terminal.

9. The method according to any one of claims 6 to 8, wherein before the sending, by the relay terminal, the first message to the first terminal, the method further comprises:
determining, by the relay terminal, that the first unicast link is established between the relay terminal and the first terminal.

10. The method according to any one of claims 6 to 9, further comprising:
receiving, by the relay terminal, a response message of the first message from the first terminal, wherein the response message indicates that first information of the first unicast link has been updated to second information, and the second information comprises the application layer identifier of the second terminal and the first address.

11. A terminal, comprising:
at least one processor; and
a memory (902, 1002) in communication connection with the at least one processor, wherein
the memory stores instructions that can be executed by the at least one processor, and the instructions (904) are executed by the at least one processor, so that the at least one processor can perform the method according to any one of claims 1 to 5 or the method according to any one of claims 6 to 10.

## Patentansprüche

1. Kommunikationsverfahren in einem drahtlosen Kommunikationsnetzwerksystem mit Vorrichtung-zu-Vorrichtung-Kommunikation, das umfasst:
Empfangen, durch ein erstes Endgerät, einer ersten Nachricht von einem Relaisendgerät, wobei das Relaisendgerät ein Relaisendgerät, das für eine Kommunikation zwischen dem ersten Endgerät und einem zweiten Endgerät verwendet wird, ist und die erste Nachricht erste Anzeigeinformationen, eine Anwendungsschichtkennung des zweiten Endgeräts und eine erste Adresse des zweiten Endgeräts umfasst, wobei die ersten Anzeigeinformationen eine erste Unicast-Verbindung zwischen dem ersten Endgerät und dem Relaisendgerät anzeigen können; und
Aktualisieren (S302, S404, S504), durch das erste Endgerät, erster Informationen der ersten Unicast-Verbindung basierend auf der ersten Nachricht, um aktualisierte zweite Informationen der ersten Unicast-Verbindung zu erhalten, wobei die zweiten Informationen die Anwendungsschichtkennung des zweiten Endgeräts und die erste Adresse umfassen;
wobei die erste Adresse eine Netzwerkschichtadresse des zweiten Endgeräts umfasst; und
die zweiten Informationen ferner eine Datenverbindungsschichtadresse des Relaisendgeräts umfassen, **dadurch gekennzeichnet, dass** die Datenverbindungsschichtadresse des Relaisendgeräts einer Anwendungsschichtkennung des Relaisendgeräts zugeordnet ist und die Datenverbindungsschichtadresse des Relaisendgeräts ferner der Anwendungsschichtkennung des zweiten Endgeräts zugeordnet ist.

2. Verfahren nach Anspruch 1, das ferner umfasst:
Senden, durch das erste Endgerät, erster Daten an das Relaisendgerät über die erste Unicast-Verbindung basierend auf den zweiten Informationen der ersten Unicast-Verbindung, wobei die ersten Daten die erste Adresse umfassen und die erste Adresse anzeigt, dass ein Zielempfangsende der ersten Daten das zweite Endgerät ist.

3. Verfahren nach Anspruch 1 oder 2, wobei die ersten Anzeigeinformationen eine Verbindungskennung der ersten Unicast-Verbindung umfassen.

4. Verfahren nach einem der Ansprüche 1 bis 3, wobei die ersten Anzeigeinformationen die Datenverbindungsschichtadresse des Relaisendgeräts und eine Datenverbindungsschichtadresse des ersten Endgeräts umfassen.

5. Verfahren nach Anspruch 4, wobei die erste Nachricht ferner die Datenverbindungsschichtadresse des Relaisendgeräts umfasst.

6. Kommunikationsverfahren in einem drahtlosen Kommunikationsnetzwerksystem mit Vorrichtung-zu-Vorrichtung-Kommunikation, das umfasst:
Erzeugen, durch ein Relaisendgerät, einer ersten Nachricht, wobei das Relaisendgerät ein Relaisendgerät, das für die Kommunikation zwischen einem ersten Endgerät und
einem zweiten Endgerät verwendet wird, ist und die erste Nachricht erste Anzeigeinformationen, eine Anwendungsschichtkennung des zweiten Endgeräts und
eine erste Adresse des zweiten Endgeräts umfasst, wobei die ersten Anzeigeinformationen eine erste Unicast-Verbindung zwischen dem ersten Endgerät und dem Relaisendgerät anzeigen können; und
Senden (S301, S403, S503), durch das Relaisendgerät, der ersten Nachricht an das erste Endgerät,
wobei die erste Adresse eine Netzwerkschichtadresse des zweiten Endgeräts umfasst, wobei die erste Nachricht ferner eine Datenverbindungsschichtadresse des Relaisendgeräts umfasst; **dadurch gekennzeichnet, dass** die Datenverbindungsschichtadresse des Relaisendgeräts einer Anwendungsschichtkennung des Relaisendgeräts zugeordnet ist und die Datenverbindungsschichtadresse des Relaisendgeräts ferner der Anwendungsschichtkennung des zweiten Endgeräts zugeordnet ist.

7. Verfahren nach Anspruch 6, wobei die ersten Anzeigeinformationen eine Verbindungskennung der ersten Unicast-Verbindung umfassen.

8. Verfahren nach Anspruch 6 oder 7, wobei die ersten Anzeigeinformationen eine Datenverbindungsschichtadresse des ersten Endgeräts und die Datenverbindungsschichtadresse des Relaisendgeräts umfassen.

9. Verfahren nach einem der Ansprüche 6 bis 8, wobei, vor dem Senden, durch das Relaisendgerät, der ersten Nachricht an das erste Endgerät, das Verfahren ferner umfasst:
Bestimmen, durch das Relaisendgerät, dass die erste Unicast-Verbindung zwischen dem Relaisendgerät und dem ersten Endgerät hergestellt ist.

10. Verfahren nach einem der Ansprüche 6 bis 9, das ferner umfasst:
Empfangen, durch das Relaisendgerät, einer Antwortnachricht der ersten Nachricht von dem ersten Endgerät, wobei die Antwortnachricht anzeigt, dass erste Informationen der ersten Unicast-Verbindung auf zweite Informationen aktualisiert wurden, und die zweiten Informationen die Anwendungsschichtkennung des zweiten Endgeräts und die erste Adresse umfassen.

11. Endgerät, das umfasst:
mindestens einen Prozessor; und
einen Speicher (902, 1002) in Kommunikationsverbindung mit dem mindestens einen Prozessor, wobei
der Speicher Anweisungen, die durch den mindestens einen Prozessor ausgeführt werden können, speichert und die Anweisungen (904) durch den mindestens einen Prozessor ausgeführt werden, sodass der mindestens eine Prozessor das Verfahren nach einem der Ansprüche 1 bis 5 oder das Verfahren nach einem der Ansprüche 6 bis 10 durchführen kann.

## Revendications

1. Procédé de communication dans un système de réseau de communication sans fil avec communication de dispositif à dispositif, comprenant :
la réception, par un premier terminal, d'un premier message provenant d'un terminal relais, dans lequel le terminal relais est un terminal relais utilisé pour la communication entre le premier terminal et un second terminal, et le premier message comprend des premières informations d'indication, un identifiant de couche d'application du second terminal et une première adresse du second terminal, dans lequel les premières informations d'indication peuvent indiquer une première liaison de monodiffusion entre le premier terminal et le terminal relais ; et
la mise à jour (S302, S404, S504), par le premier terminal, de premières informations de la première liaison de monodiffusion sur la base du premier message, afin d'obtenir des secondes informations mises à jour de la première liaison de monodiffusion, dans lequel les secondes informations comprennent l'identifiant de couche d'application du second terminal et la première adresse ;
dans lequel la première adresse comprend une adresse de couche réseau du second terminal ; et
les secondes informations comprennent en outre une adresse de couche de liaison de données du terminal relais, **caractérisé en ce que** l'adresse de couche de liaison de données du terminal relais est associée à un identifiant de couche d'application du terminal relais, et que l'adresse de couche de liaison de données du terminal relais est en outre associée à l'identifiant de couche d'application du second terminal.

2. Procédé selon la revendication 1, comprenant en outre :
l'envoi, par le premier terminal, de premières données au terminal relais sur la première liaison de monodiffusion sur la base des secondes informations de la première liaison de monodiffusion, dans lequel les premières données comprennent la première adresse et la première adresse indique qu'une extrémité de réception de destination des premières données est le second terminal.

3. Procédé selon la revendication 1 ou 2, dans lequel les premières informations d'indication comprennent un identifiant de liaison de la première liaison de monodiffusion.

4. Procédé selon l'une quelconque des quelconque des revendications 1 à 3, dans lequel les premières informations d'indication comprennent l'adresse de couche de liaison de données du terminal relais et une adresse de couche de liaison de données du premier terminal.

5. Procédé selon la revendication 4, dans lequel le premier message comprend en outre l'adresse de couche de liaison de données du terminal relais.

6. Procédé de communication dans un système de réseau de communication sans fil avec communication de dispositif à dispositif, comprenant :
la génération, par un terminal relais, d'un premier message, dans lequel le terminal relais est un terminal relais utilisé pour une communication entre un premier terminal et un second terminal, et le premier message comprend des premières informations d'indication, un identifiant de couche d'application du second terminal, et une première adresse du second terminal, dans lequel les premières informations d'indication peuvent indiquer une première liaison de monodiffusion entre le premier terminal et le terminal relais ; et
l'envoi (S301, S403, S503), par le terminal relais, du premier message au premier terminal,
dans lequel la première adresse comprend une adresse de couche réseau du second terminal,
dans lequel le premier message comprend en outre une adresse de couche de liaison de données du terminal relais ; **caractérisé en ce que**
l'adresse de la couche de liaison de données du terminal relais est associée à un identifiant de couche d'application du terminal relais, et l'adresse de couche de liaison de données du terminal relais est en outre associée à l'identifiant de couche d'application du second terminal.

7. Procédé selon la revendication 6, dans lequel les premières informations d'indication comprennent un identifiant de liaison de la première liaison de monodiffusion.

8. Procédé selon la revendication 6 ou 7, dans lequel les premières informations d'indication comprennent une adresse de couche de liaison de données du premier terminal et l'adresse de couche de liaison de données du terminal relais.

9. Procédé selon l'une quelconque des revendications 6 à 8, dans lequel, avant l'envoi, par le terminal relais, du premier message au premier terminal, le procédé comprend en outre :
la détermination, par le terminal relais, du fait que la première liaison de monodiffusion est établie entre le terminal relais et le premier terminal.

10. Procédé selon l'une quelconque des revendications 6 à 9, comprenant en outre :
la réception, par le terminal relais, d'un message de réponse au premier message provenant du premier terminal, dans lequel le message de réponse indique que les premières informations de la première liaison de monodiffusion ont été mises à jour aux secondes informations, et que les secondes informations comprennent l'identifiant de couche d'application du second terminal et la première adresse.

11. Terminal, comprenant :
au moins un processeur ; et
une mémoire (902, 1002) en connexion de communication avec l'au moins un processeur, dans lequel
la mémoire stocke des instructions qui peuvent être exécutées par l'au moins un processeur, et les instructions (904) sont exécutées par l'au moins un processeur, de sorte que l'au moins un processeur peut effectuer le procédé selon l'une quelconque des revendications 1 à 5 ou le procédé selon l'une quelconque des revendications 6 à 10.
